(19) **Europäisches Patentamt / European Patent Office / Office européen des brevets**

(11) **EP 4 535 867 A1**

(12) **EUROPEAN PATENT APPLICATION**
published in accordance with Art. 153(4) EPC

(43) Date of publication:
09.04.2025 Bulletin 2025/15

(21) Application number: 23841999.8

(22) Date of filing: 21.06.2023

(51) International Patent Classification (IPC):
*H04W 36/00* (2009.01)

(52) Cooperative Patent Classification (CPC):
H04W 36/00; H04W 36/08; H04W 36/32;
H04W 48/08; H04W 48/16; H04W 48/20

(86) International application number:
PCT/CN2023/101613

(87) International publication number:
WO 2024/016933 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.07.2022 CN 202210860137

(71) Applicant: Huawei Technologies Co., Ltd.
Shenzhen, Guangdong 518129 (CN)

(72) Inventors:
• WU, Xiaoning
  Shenzhen, Guangdong 518129 (CN)
• ZHONG, Yaping
  Shenzhen, Guangdong 518129 (CN)
• HU, Xingxing
  Shenzhen, Guangdong 518129 (CN)
• GENG, Tingting
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **CELL SEARCH METHOD AND COMMUNICATION APPARATUS**

(57) This application provides a cell search method and a communication apparatus. In the method, a terminal device can receive first information indicating the terminal device to search for a terrestrial network TN neighboring cell. Even if the terminal device is not within a coverage area of a non-terrestrial network NTN cell or the terminal device is at an edge of the coverage area of the NTN cell, the terminal device can search for the TN neighboring cell based on the first information, instead of immediately stopping performing an idle mode task. This helps increase a probability that the terminal device camps on a TN in an NTN discontinuous coverage scenario, and improve communication experience.

```
┌──────────────────┐                    ┌─────────────────────┐
│ Terminal device  │                    │        NTN          │
│                  │                    │ access network device│
└────────┬─────────┘                    └──────────┬──────────┘
         │   201: Send service information of a     │
         │◄──satellite and coverage information of an─│
         │        NTN cell of the satellite          │
         │                                           │
         │◄────── 202: Send first information ────────│
         │                                           │
         │◄────203: Send first indication information─│
         │                                           │
┌────────┴───────────────────────────────┐          │
│ 204: When the terminal device determines,│         │
│ based on the service information and the │         │
│ coverage information, that the terminal  │         │
│ device is not within a coverage area of  │         │
│ the NTN cell or is at an edge of the     │         │
│ coverage area of the NTN cell, the       │         │
│ terminal device searches for a TN        │         │
│ neighboring cell based on the first      │         │
│ information                              │         │
└──────────────────────────────────────────┘         │
```

FIG. 2

## Description

This application claims priority to Chinese Patent Application No. 202210860137.9, filed with the China National Intellectual Property Administration on July 21, 2022 and entitled "CELL SEARCH METHOD AND COMMUNICATION APPARATUS", which is incorporated herein by reference in its entirety.

## TECHNICAL FIELD

Embodiments of this application relate to the communication field, and in particular, to a cell search method and a communication apparatus.

## BACKGROUND

In a non-terrestrial network (non-terrestrial network, NTN), a coverage area provided by a non-terrestrial communication network device (for example, a satellite) varies with movement of the non-terrestrial communication network device. In this way, when continuous coverage of the NTN network cannot be provided because a quantity of non-terrestrial network devices is small, a terminal device located at a particular location may fail to receive a signal of the NTN network at a particular moment, and therefore experiences discontinuous coverage of the NTN network. This phenomenon is referred to as NTN discontinuous coverage.

In a current 5G communication standard, in an NTN discontinuous coverage scenario, when a terminal device is not within a coverage area of an NTN cell, the terminal device needs to stop performing an idle mode task. After the terminal device stops performing the idle mode task, the terminal device cannot perform a function such as cell search related to terminal access. Consequently, access of the terminal device to a network may be affected, and further communication experience is affected.

## SUMMARY

This application provides a cell search method and a communication apparatus, to improve a probability that a terminal device camps on a terrestrial network (terrestrial network, TN) in an NTN discontinuous coverage scenario, thereby helping improve communication experience.

According to a first aspect, this application provides a cell search method, and the method is applied to a terminal device. Specifically, the terminal device receives service information of a satellite and coverage information of an NTN cell of the satellite. In addition, the terminal device further receives first information. The first information indicates the terminal device to search for a TN neighboring cell. Then, the terminal device determines, based on the service information and the coverage information, whether the terminal device is within a coverage area of the NTN cell or whether the terminal device is at an edge of the coverage area of the NTN cell. When the terminal device determines that the terminal device is not within the coverage area of the NTN cell or is at the edge of the coverage area of the NTN cell, the terminal device searches for the TN neighboring cell based on the first information.

The service information includes ephemeris information and/or service start time information. The service information includes ephemeris information of a neighboring satellite. Optionally, the service information further includes ephemeris information of a serving satellite. The service start time information indicates a time at which the neighboring satellite starts to provide a service for a terminal device in a geographical area. The coverage information of the NTN cell can indicate at least one NTN cell. The at least one NTN cell includes an NTN serving cell and/or an NTN neighboring cell. The searching for a TN neighboring cell means that the terminal device starts a process of searching for a TN cell on which the terminal device can camp. The terminal device may find a TN neighboring cell (that is, find a TN neighboring cell on which the terminal device can camp), or may not find a TN neighboring cell (that is, find no TN neighboring cell on which the terminal device can camp).

In this application, because the terminal device can receive the first information that indicates the terminal device to search for a TN neighboring cell, even if the terminal device is not within the coverage area of the NTN cell or the terminal device is located at the edge of the coverage area of the NTN cell, the terminal device can search for the TN neighboring cell based on the first information, instead of immediately stopping performing an idle mode task. Therefore, this helps increase a probability that the terminal device camps on a TN in an NTN discontinuous coverage scenario, thereby helping improve communication experience.

In a possible implementation, the first information includes TN neighboring cell indication information and search time indication information.

The TN neighboring cell indication information indicates whether an NTN serving cell has a TN neighboring cell, that is, indicate whether there is a TN neighboring cell near a geographical area in which the NTN serving cell is located. For example, the TN neighboring cell indication information received by the terminal device indicates that the NTN serving cell has a TN neighboring cell. For another example, the TN neighboring cell indication information received by the terminal device indicates that the NTN serving cell does not have a TN neighboring cell.

The search time indication information indicates duration allowed by the terminal device for searching for the TN neighboring cell, that is, maximum duration between a moment at which the terminal device starts to search for the TN neighboring cell and a moment at which the terminal device stops searching for the TN neighboring cell. For example, the duration indicated by the search time indication information is T1, and the terminal device, when starting to search for the TN neighboring cell, may start a timer 1 with duration of T1. During running of the timer 1, the terminal device continuously searches for the TN neighboring cell until the timer 1 expires.

In this implementation, the terminal device can receive the search time indication information, and limit, based on the search time indication information, a time consumed by the terminal device in searching for the TN neighboring cell. In this way, the terminal device can perform a search within a search time configured on a network side, and the terminal device can be prevented from continuously searching when the terminal device does not find the TN neighboring cell on which the terminal device can camp. Therefore, this helps reduce energy consumption of the terminal device.

In a possible implementation, that the terminal device searches for the TN neighboring cell based on the first information includes: When the TN neighboring cell indication information indicates that the NTN serving cell has a TN neighboring cell, the terminal device searches for the TN neighboring cell within the duration indicated by the search time indication information.

Optionally, when the terminal device finds, in a geographical area in which the terminal device is located, the TN neighboring cell within the duration indicated by the search time indication information, the terminal device camps on the TN neighboring cell.

In this implementation, the terminal device can determine, based on the TN neighboring cell indication information, that there is a TN cell near the NTN cell, to trigger the terminal device to search for the TN neighboring cell when the terminal device is not within the coverage area of the NTN cell or is at the edge of the coverage area of the NTN cell, thereby avoiding a case in which the terminal device directly stops performing an idle mode task (that is, directly disabling an AS-side function) when the terminal device is not within the coverage area of the NTN cell. Therefore, this helps increase a probability that the terminal device camps on a TN in an NTN discontinuous coverage scenario, thereby helping improve communication experience.

In a possible implementation, the method further includes: When the terminal device does not find the TN neighboring cell within the duration indicated by the search time indication information, the terminal device stops performing an idle mode task.

In this implementation, the terminal device can further limit, based on the duration indicated by the search time indication information, a time consumed by the terminal device in searching for the TN neighboring cell. This can prevent the terminal device from continuously searching when the terminal device does not find the TN neighboring cell on which the terminal device can camp. Therefore, this helps reduce energy consumption of the terminal device.

In a possible implementation, the first information further includes a distance threshold. The distance threshold is used to indicate to perform an idle mode task when a distance between a current geographical location of the terminal device and a reference geographical location reaches the distance threshold.

The method further includes: When the distance between the current geographical location of the terminal device and the reference geographical location reaches the distance threshold, the terminal device performs the idle mode task.

The reference geographical location is a geographical location of the terminal device when the terminal device is triggered to perform a TN cell search due to discontinuous coverage of the NTN cell last time, or a geographical location of the terminal device when the terminal device last triggers stopping of performing the idle mode task.

In this implementation, the terminal device can obtain the distance threshold, and the terminal device can store a current geographical location of the terminal device as a reference geographical location when stopping performing the idle mode task, so that the terminal device can start performing the idle mode task again when a distance between the terminal device after movement and the reference geographical location reaches the distance threshold. This helps prevent the terminal device from missing the TN neighboring cell due to continuous stopping of the idle mode task, and helps increase a probability that the terminal device finds the TN neighboring cell, thereby ensuring communication of the terminal device.

In a possible implementation, the first information includes geographical area information corresponding to the TN neighboring cell. The geographical area information corresponding to the TN neighboring cell indicates a geographical area in which there is at least one TN neighboring cell. For example, the geographical area information corresponding to the TN neighboring cell may be latitude and longitude, an administrative region, a national area, or the like. The geographical area may be represented by geographical location information such as latitude and longitude, an administrative area, or a national area.

Optionally, after the terminal device receives the geographical area information corresponding to the TN neighboring cell, if the terminal device determines, based on the service information and the coverage information, that the terminal device is not within the coverage area of the NTN cell or is at the edge of the coverage area of the NTN cell, the terminal device searches for the TN neighboring cell based on the geographical area information corresponding to the TN neighboring cell.

In a possible implementation, that the terminal device searches for the TN neighboring cell based on the first information includes: The terminal device searches for the TN neighboring cell in the geographical area indicated by the geographical area information corresponding to the TN neighboring cell.

In this implementation, the terminal device can obtain the geographical area information corresponding to the TN neighboring cell, to determine a geographical area in which the TN neighboring cell exists. Therefore, the terminal device searches for the TN neighboring cell in the geographical area indicated by the geographical area information corresponding to the TN neighboring cell. This helps increase a probability that the terminal device finds the TN neighboring cell.

In a possible implementation, the method further includes: When a current geographical location of the terminal device does not belong to the geographical area indicated by the geographical area information of the TN neighboring cell, the terminal device stops performing an idle mode task.

In this implementation, an NTN access network device can provide the geographical area information corresponding to the TN neighboring cell to the terminal device, to indicate, to the terminal device, geographical areas in which the TN neighboring cell exists. If the terminal device determines, based on the geographical area information corresponding to the TN neighboring cell, that the terminal device is not within the geographical area indicated by the geographical area information corresponding to the TN neighboring cell, when the terminal device is not within the coverage area of the NTN cell or is at the edge of the coverage area of the NTN cell, the terminal device stops performing the idle mode task. This helps prevent the terminal device from continuously searching for the TN neighboring cell in a geographical area with no TN neighboring cell, thereby helping reduce energy consumption of the terminal device.

In a possible implementation, the method further includes: When the current geographical location of the terminal device belongs to the geographical area indicated by the geographical area information of the TN neighboring cell, the terminal device triggers execution of the idle mode task.

In this implementation, an NTN access network device can provide the geographical area information corresponding to the TN neighboring cell to the terminal device, to indicate geographical areas in which the TN neighboring cell exists to the terminal device. If the terminal device determines, based on the geographical area information corresponding to the TN neighboring cell, that the terminal device is within the geographical area indicated by the geographical area information corresponding to the TN neighboring cell, when the terminal device is not within the coverage area of the NTN cell, the terminal device may not need to directly stop performing the idle mode task (that is, may not need to directly disable an AS-side function). Therefore, this helps increase a probability that the terminal device camps on a TN in an NTN discontinuous coverage scenario, thereby helping improve communication experience.

In a possible implementation, the first information further includes TN neighboring cell information. The TN neighboring cell information includes frequency information of at least one TN neighboring cell and/or cell identifier information of the at least one TN neighboring cell. The method further includes: When the current geographical location of the terminal device belongs to the geographical area indicated by the geographical area information of the TN neighboring cell, the terminal device searches for the at least one TN neighboring cell indicated by the TN neighboring cell information.

In this implementation, an NTN access network device can provide TN neighboring cell information to the terminal device to indicate a frequency. Therefore, correspondingly, the terminal device can determine a frequency of at least one TN neighboring cell based on the TN neighboring cell information. In this way, the terminal device can search for the TN neighboring cell based on the foregoing frequency instead of blindly searching for the TN neighboring cell. Therefore, this helps narrow a frequency range for searching and improve searching efficiency.

In a possible implementation, before the terminal device searches for the TN neighboring cell based on the first information, the method further includes: The terminal device receives first indication information. The first indication information indicates to trigger a search for the TN neighboring cell based on the first information when the terminal device is not within the coverage area of the NTN cell. This may also be understood as follows: The first indication information indicates a time at which the terminal device searches for the TN neighboring cell through the first information. The time is a moment at which either of a condition 1 (that is, the terminal device is not within the coverage area of the NTN cell) and a condition 2 (that is, the terminal device is at the edge of the coverage area of the NTN cell) is met.

In this implementation, an NTN access network device explicitly indicates, through the first indication information, the terminal device to search for the TN neighboring cell based on the first information only when the terminal device determines that the terminal device is not within the coverage area of the NTN cell or is at the edge of the coverage area of the NTN cell, instead of immediately searching for the TN neighboring cell based on the first information upon receiving the first information. That is, when receiving the first information, the terminal device may not need to immediately start to search for the TN neighboring cell based on the first information. This helps prevent the terminal device from keeping searching for the TN neighboring cell when the terminal device receives the first information but is located in the coverage area of the NTN cell, thereby reducing energy consumption of the terminal device and improving power saving performance of the terminal device. In addition, the terminal device within the coverage area of the NTN cell may also be prevented from being connected to a TN as much as possible, thereby helping reduce load of the TN network.

According to a second aspect, this application provides a cell search method, and the method is applied to an access network device. Specifically, the access network device sends service information of a satellite and coverage information of an NTN cell of the satellite. In addition, the access network device further sends first information. The first information indicates a terminal device to search for a TN neighboring cell.

Optionally, the access network device is an NTN access network device.

In this application, because the access network device can provide, for the terminal device, the first information that indicates the terminal device to search for a TN neighboring cell, the service information of the satellite, and the coverage information of the NTN cell of the satellite, even if the terminal device is not within a coverage area of the NTN cell or the terminal device is located at an edge of the coverage area of the NTN cell, the terminal device can search for the TN neighboring cell based on the first information, instead of immediately stopping performing an idle mode task. Therefore, this helps increase a probability that the terminal device camps on a TN in an NTN discontinuous coverage scenario, thereby helping improve communication experience.

In a possible implementation, the first information includes TN neighboring cell indication information and search time indication information. The TN neighboring cell indication information indicates whether an NTN serving cell has a TN neighboring cell. The search time indication information indicates duration allowed by the terminal device for searching for the TN neighboring cell.

In a possible implementation, the first information further includes a distance threshold. The distance threshold is used to indicate to trigger execution of an idle mode task when a distance between a current geographical location of the terminal device and a reference geographical location reaches the distance threshold. The reference geographical location is a geographical location of the terminal device when the terminal device is triggered to perform a TN cell search due to discontinuous coverage of the NTN cell last time, or a geographical location of the terminal device when the terminal device last triggers stopping of performing the idle mode task.

In a possible implementation, the first information includes geographical area information corresponding to the TN neighboring cell. The geographical area information corresponding to the TN neighboring cell indicates a geographical area in which there is at least one TN neighboring cell.

In a possible implementation, the first information further includes TN neighboring cell information. The TN neighboring cell information includes frequency information of at least one TN neighboring cell and/or cell identifier information of the at least one TN neighboring cell.

In a possible implementation, that the access network device sends first information includes: The access network device sends the first information to the terminal device within a preset time range before a service stop time of the NTN serving cell in which the terminal device is located.

The service stop time of the NTN cell is a moment at which the NTN access network device disables a radio frequency module corresponding to the NTN cell, that is, a moment at which the NTN access network device disables a beam corresponding to the NTN cell. For example, the NTN cell is an NTN quasi-earth fixed cell, and a beam of the NTN access network device can fixedly cover a geographical area within a period of time. After the foregoing period of time, the NTN access network device disables the radio frequency module corresponding to the NTN cell, that is, the NTN access network device disables the beam corresponding to the NTN cell.

In this implementation, the NTN access network device can send the first information when the NTN cell is to reach the service stop time (that is, before the NTN access network device is to disable the radio frequency module corresponding to the NTN cell, or before the NTN access network device is to disable the beam corresponding to the NTN cell), instead of continuously sending the first information in an entire cycle in which the NTN cell provides a service for the terminal device. This not only enables the terminal device to receive the first information exactly before the terminal device needs to use the first information, but also helps reduce signaling overheads and can reduce energy consumption caused by receiving signaling by the terminal device.

In a possible implementation, before the access network device sends the first information to the terminal device, the method further includes: The access network device determines, based on the service information of the satellite and the coverage information of the NTN cell of the satellite, that the terminal device is to leave a coverage area of the NTN cell or is at an edge of the coverage area of the NTN cell.

In a possible implementation, the method further includes: The access network device sends first indication information to the terminal device. The first indication information indicates to trigger a search for the TN neighboring cell based on the first information when the terminal device is not within the coverage area of the NTN cell or is at the edge of the coverage area of the NTN cell.

It should be noted that specific implementations and beneficial effects of this aspect are similar to some implementations of the first aspect. For details, refer to the specific implementations and beneficial effects of the first aspect. Details are not described herein again.

According to a third aspect, this application provides a cell search method, and the method is applied to a terminal device. Specifically, the terminal device obtains service information of a satellite and coverage information of an NTN cell of the satellite. The terminal device is located in a TN cell. When the terminal device determines, based on the service information and the coverage information, that the terminal device is within a coverage area of the NTN cell, the terminal device starts to search for the NTN cell.

That the terminal device is located in a TN cell may be understood as that the terminal device camps on the TN cell. The terminal device may receive a system broadcast message of the TN cell.

In this application, a terminal device camping on a TN can obtain service information of a satellite and coverage information of an NTN cell of the satellite, and determine, based on the service information and the coverage information of the NTN cell, whether there is NTN coverage (that is, determine whether the terminal device is within a coverage area of the NTN cell). In this way, when determining that the terminal device is within the coverage area of the NTN cell, the terminal device starts to search for the NTN cell. When determining that the terminal device is not within the coverage area of the NTN cell or is at an edge of the coverage area of the NTN cell, the terminal device does not start to search for the NTN cell. Therefore, this helps the terminal device determine a condition under which a search for an NTN cell can be triggered, so that the terminal device can camp on an NTN again from the TN, thereby facilitating load balancing management.

In a possible implementation, the method further includes: The terminal device receives first time information. The first time information is used by the terminal device to determine a moment for starting to search for the NTN cell, or is used by the terminal device to determine a moment for reselecting to the NTN cell.

Optionally, a TN access network device sends different first time information to different terminal devices. Therefore, the different terminal devices start to search for the NTN cell at different moments, or the different terminal devices reselect to the NTN cell at different moments. In other words, the first time information has a function of staggering moments at which different terminal devices start to search for an NTN cell. Alternatively, the first time information has a function of staggering moments at which different terminal devices reselect to an NTN cell.

In this embodiment, the TN access network device provides the first time information for the terminal device, so that the terminal device determines, based on the first time information, the moment for starting to search for the NTN cell or the moment for reselecting to the NTN cell. This helps the terminal device start to search for the NTN cell or reselect to the NTN cell at a moment accurately. In addition, the TN access network device may send different first time information to different terminal devices (for example, terminal devices in different TN cells), to enable the different terminal devices to determine different moments for starting to search for an NTN cell, or determine different moments for reselecting to an NTN cell. This helps the terminal devices start to search for the NTN cell at different moments or trigger reselection to the NTN cell, thereby preventing a large quantity of terminal devices from being connected to an NTN network at the same time.

In a possible implementation, the first time information includes a first moment and first duration. Optionally, the moment for starting to search for the NTN cell or the moment for reselecting to the NTN cell is equal to the first moment plus a product of an adjustment coefficient and the first duration. The adjustment coefficient is a random number generated by the terminal device.

For example, that the terminal device determines a moment for starting to search for the NTN cell, or the terminal device determines a moment for reselecting to the NTN cell includes the following step:
The terminal device determines, based on the following formula, the moment for starting to search for the NTN cell or the moment for reselecting to the NTN cell:

$$T = M1 + R \times D.$$

T is the moment for starting to search for the NTN cell or the moment for reselecting to the NTN cell. M1 is the first moment of a TN. D is the first duration. R is the random number generated by the terminal device.

In a possible implementation, the first time information includes first duration. Optionally, the moment for starting to search for the NTN cell or the moment for reselecting to the NTN cell is equal to a moment at which the terminal device predicts that there is NTN coverage plus a product of an adjustment coefficient and the first duration. The adjustment coefficient is a random number generated by the terminal device.

For example, that the terminal device determines a moment for starting to search for the NTN cell, or the terminal device determines a moment for reselecting to the NTN cell includes the following step:
The terminal device determines, based on the following formula, the moment for starting to search for the NTN cell or the moment for reselecting to the NTN cell:

$$T = M2 + R \times D.$$

T is the moment for starting to search for the NTN cell or the moment for reselecting to the NTN cell. M2 is a moment at which the terminal device predicts that there is NTN coverage. D is the first duration. R is a random number generated by the terminal device.

In a possible implementation, that the terminal device obtains service information of a satellite and coverage information of an NTN cell of the satellite includes: When camping on the NTN cell, the terminal device stores the received service information of the satellite and the received coverage information of the NTN cell. For example, the terminal device camps on the NTN cell at a historical moment, and can receive the service information of the satellite and the coverage information of the NTN cell that are broadcast by an NTN access network device. **In** this way, the terminal device can store the received service information of the satellite and the received coverage information of the NTN cell, so that when the terminal device needs to search for an NTN cell again, it can be determined whether the terminal device is currently within a coverage area of the NTN cell.

In this implementation, the terminal device can store the received service information of the satellite and the received coverage information of the NTN cell when camping on the NTN cell, so that after leaving the NTN cell, the terminal device can still obtain the service information of the satellite and the coverage information of the NTN cell in a case of no network coverage. This helps the terminal device quickly determine, based on the service information and the coverage information of the NTN cell, whether the terminal device is within the coverage area of the NTN cell or whether the terminal device is at the edge of the coverage area of the NTN cell.

In a possible implementation, that the terminal device obtains service information of a satellite and coverage information of an NTN cell of the satellite includes: The terminal device receives the service information of the satellite and the coverage information of the NTN cell from the TN cell. For example, a TN access network device broadcasts the service information of the satellite and the coverage information of the NTN cell. Correspondingly, the terminal device receives the service information of the satellite and the coverage information of the NTN cell. The service information of the satellite and the coverage information of the NTN cell that are broadcast by the TN access network device to the terminal device may be configured by operation and maintenance personnel for the TN access network device, or may be sent by an NTN access network device to the TN access network device through an interface (for example, an Xn interface) between the access network devices, or may be obtained by the TN access network device from a terrestrial gateway or a core network device. This is not specifically limited herein.

In this implementation, the terminal device can receive, in the TN cell, the service information of the satellite and the coverage information of the NTN cell. This helps the terminal device camping on the TN cell determine, based on the service information and the coverage information of the NTN cell, whether the terminal device is within the coverage area of the NTN cell or whether the terminal device is at the edge of the coverage area of the NTN cell.

According to a fourth aspect, this application provides a cell search method, and the method is applied to a TN access network device. Specifically, the TN access network device sends service information of a satellite and coverage information of an NTN cell of the satellite to a terminal device in a TN cell. The service information and the coverage information are used by the terminal device to start to search for an NTN cell when the terminal device determines, based on the service information and the coverage information, that the terminal device is in a coverage area of the NTN cell.

In a possible implementation, the method further includes: The TN access network device sends first time information. The first time information is used by the terminal device to determine a moment for starting to search for the NTN cell, or is used by the terminal device to determine a moment for reselecting to the NTN cell.

In a possible implementation, the first time information includes a first moment and first duration. Optionally, the moment for starting to search for the NTN cell or the moment for reselecting to the NTN cell is equal to the first moment plus a product of an adjustment coefficient and the first duration. The adjustment coefficient is a random number generated by the terminal device.

In a possible implementation, the first time information includes first duration. Optionally, the moment for starting to search for the NTN cell or the moment for reselecting to the NTN cell is equal to a moment at which the terminal device predicts that there is NTN coverage plus a product of an adjustment coefficient and the first duration. The adjustment coefficient is a random number generated by the terminal device.

It should be noted that specific implementations and beneficial effects of this aspect are similar to some implementations of the third aspect. For details, refer to the specific implementations and beneficial effects of the third aspect. Details are not described herein again.

According to a fifth aspect, this application provides a communication apparatus. The communication apparatus may be a terminal device. The communication apparatus includes a transceiver module and a processing module. The transceiver module is configured to receive service information of a satellite and coverage information of an NTN cell of the satellite and receive first information. The first information indicates the communication apparatus to search for a TN neighboring cell. The processing module is configured to determine, based on the service information and the coverage information of the NTN cell, whether the communication apparatus is within a coverage area of the NTN cell or whether the communication apparatus is at an edge of the coverage area of the NTN cell. The processing module is further configured to: when determining, based on the service information and the coverage information, that the communication apparatus is not within the coverage area of the NTN cell or is at the edge of the coverage area of the NTN cell, search for the TN neighboring cell based on the first information.

In a possible implementation, the first information includes TN neighboring cell indication information and search time indication information. The TN neighboring cell indication information indicates whether an NTN serving cell has a TN neighboring cell. The search time indication information indicates duration allowed by the communication apparatus for searching for the TN neighboring cell.

In a possible implementation, the processing module is specifically configured to: when the TN neighboring cell indication information indicates that the NTN serving cell has a TN neighboring cell, search for the TN neighboring cell within the duration indicated by the search time indication information.

In a possible implementation, the processing module is further configured to: when the communication apparatus does not find the TN neighboring cell within the duration indicated by the search time indication information, stop performing an idle mode task.

In a possible implementation, the first information further includes a distance threshold. The processing module is further configured to perform the idle mode task when a distance between a current geographical location of the communication apparatus and a reference geographical location reaches the distance threshold. The reference geographical location is a geographical location of the communication apparatus when the communication apparatus is triggered to perform a TN cell search due to discontinuous coverage of the NTN cell last time, or a geographical location of the communication apparatus when the communication apparatus is triggered to stop performing the idle mode task last time.

In a possible implementation, the first information includes geographical area information corresponding to the TN neighboring cell.

In a possible implementation, the processing module is specifically configured to search for the TN neighboring cell in a geographical area indicated by the geographical area information corresponding to the TN neighboring cell.

In a possible implementation, the processing module is further configured to: when a current geographical location of the communication apparatus does not belong to the geographical area indicated by the geographical area information of the TN neighboring cell, stop performing the idle mode task.

In a possible implementation, the processing module is further configured to: when the current geographical location of the communication apparatus belongs to the geographical area indicated by the geographical area information of the TN neighboring cell, trigger execution of the idle mode task.

In a possible implementation, the first information further includes TN neighboring cell information. The TN neighboring cell information includes frequency information of at least one TN neighboring cell and/or cell identifier information of the at least one TN neighboring cell.

The processing module is further configured to: when the current geographical location of the communication apparatus belongs to the geographical area indicated by the geographical area information of the TN neighboring cell, search for the at least one TN neighboring cell indicated by the TN neighboring cell information.

In a possible implementation, the processing module is further configured to receive, by the communication apparatus, first indication information. The first indication information indicates to trigger a search for the TN neighboring cell based on the first information when the terminal device is not within the coverage area of the NTN cell.

It should be noted that specific implementations and beneficial effects of this aspect are similar to some implementations of the first aspect. For details, refer to the specific implementations and beneficial effects of the first aspect. Details are not described herein again.

According to a sixth aspect, this application further provides a communication apparatus. The communication apparatus may be an access network device. Optionally, the access network device is an NTN access network device. The communication apparatus includes a transceiver module and a processing module. The transceiver module is configured to send service information of a satellite and coverage information of an NTN cell of the satellite. The processing module is configured to generate first information. The transceiver module is further configured to send the first information. The first information indicates a terminal device to search for a TN neighboring cell.

In a possible implementation, the first information includes TN neighboring cell indication information and search time indication information. The TN neighboring cell indication information indicates whether an NTN serving cell has a TN neighboring cell. The search time indication information indicates duration allowed by the terminal device for searching for the TN neighboring cell.

In a possible implementation, the first information further includes a distance threshold. The distance threshold is used to indicate to trigger execution of an idle mode task when a distance between a current geographical location of the terminal device and a reference geographical location reaches the distance threshold. The reference geographical location is a geographical location of the terminal device when the terminal device is triggered to perform a TN cell search due to discontinuous coverage of the NTN cell last time, or a geographical location of the terminal device when the terminal device last triggers stopping of performing the idle mode task.

In a possible implementation, the first information includes geographical area information corresponding to the TN neighboring cell. The geographical area information corresponding to the TN neighboring cell indicates a geographical area in which there is at least one TN neighboring cell.

In a possible implementation, the first information further includes TN neighboring cell information. The TN neighboring cell information includes frequency information of at least one TN neighboring cell and/or cell identifier information of the at least one TN neighboring cell.

In a possible implementation, the transceiver module is specifically configured to send the first information to the terminal device within a preset time range before a service stop time of the NTN serving cell in which the terminal device is located.

In a possible implementation, the processing module is further configured to determine, based on the service information of the satellite and the coverage information of the NTN cell of the satellite, that the terminal device is not within a coverage area of the NTN cell or is at an edge of the coverage area of the NTN cell.

In a possible implementation, the transceiver module is further configured to send first indication information to the terminal device. The first indication information indicates to trigger a search for the TN neighboring cell based on the first information when the terminal device is to leave the coverage area of the NTN cell or is at the edge of the coverage area of the NTN cell.

It should be noted that specific implementations and beneficial effects of this aspect are similar to some implementations of the first aspect. For details, refer to the specific implementations and beneficial effects of the first aspect. Details are not described herein again.

According to a seventh aspect, this application provides a communication apparatus. The communication apparatus may be a terminal device. The communication apparatus is located in a TN cell. The communication apparatus includes a transceiver module and a processing module. The transceiver module is configured to obtain service information of a satellite and coverage information of an NTN cell of the satellite. The processing module is configured to: when determining, based on the service information and the coverage information, that the communication apparatus is within a coverage area of the NTN cell, start to search for the NTN cell.

In a possible implementation, the transceiver module is further configured to receive first time information. The first time information is used by the communication apparatus to determine a moment for starting to search for the NTN cell, or is used by the communication apparatus to determine a moment for reselecting to the NTN cell.

In a possible implementation, the first time information includes a first moment and first duration.

The processing module is specifically configured to determine, based on the following formula, the moment for starting to search for the NTN cell or the moment for reselecting to the NTN cell: $T = M1 + R \times D$. $T$ is the moment for starting to search for the NTN cell or the moment for reselecting to the NTN cell. $M1$ is the first moment of a TN. $D$ is the first duration. $R$ is a random number generated by the communication apparatus.

In a possible implementation, the first time information includes first duration.

The processing module is specifically configured to determine, based on the following formula, the moment for starting to search for the NTN cell or the moment for reselecting to the NTN cell: $T = M2 + R \times D$. $T$ is the moment for starting to search for the NTN cell or the moment for reselecting to the NTN cell. $M2$ is a moment at which the terminal device predicts that there is NTN coverage. $D$ is the first duration. $R$ is a random number generated by the communication apparatus.

In a possible implementation, the processing module is configured to: when the communication apparatus camps on the NTN cell, store the received service information of the satellite and the received coverage information of the NTN cell.

In a possible implementation, the transceiver module is configured to receive the service information of the satellite and the coverage information of the NTN cell from the TN cell.

It should be noted that specific implementations and beneficial effects of this aspect are similar to some implementations of the third aspect. For details, refer to the specific implementations and beneficial effects of the third aspect. Details are not described herein again.

According to an eighth aspect, this application provides a communication apparatus. The communication apparatus may be an access network device. Optionally, the access network device is a TN access network device. The communication apparatus includes a transceiver module and a processing module. The transceiver module is configured to send service information of a satellite and coverage information of an NTN cell of the satellite to a terminal device in a TN cell. The service information and the coverage information are used by the terminal device to start to search for the NTN cell when the terminal device determines, based on the service information and the coverage information, that the terminal device is within a coverage area of the NTN cell.

In a possible implementation, the transceiver module is further configured to send first time information. The first time information is used by the terminal device to determine a moment for starting to search for the NTN cell, or is used by the terminal device to determine a moment for reselecting to the NTN cell.

Optionally, the first time information includes a first moment and first duration. Optionally, the moment for starting to search for the NTN cell or the moment for reselecting to the NTN cell is equal to the first moment plus a product of an adjustment coefficient and the first duration. The adjustment coefficient is a random number generated by the terminal device.

Optionally, the first time information includes first duration. Optionally, the moment for starting to search for the NTN cell or the moment for reselecting to the NTN cell is equal to a moment at which the terminal device predicts that there is NTN coverage plus a product of an adjustment coefficient and the first duration. The adjustment coefficient is a random number generated by the terminal device.

It should be noted that specific implementations and beneficial effects of this aspect are similar to some implementations of the third aspect. For details, refer to the specific implementations and beneficial effects of the third aspect. Details are not described herein again.

According to a ninth aspect, an embodiment of this application provides a communication apparatus. The communication apparatus may be the terminal device in the foregoing implementations, or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions. The processing module executes the instructions stored in the storage module to enable the terminal device to perform the method according to any one of the first aspect or the implementations of the first aspect; or perform the method according to any one of the third aspect or the implementations of the third aspect. When the communication apparatus is the chip in the terminal device, the processing module may be a processor, and the transceiver module may be an input/output interface, a pin, a circuit, or the like. The processing module executes instructions stored in a storage module to enable the terminal device to perform the method according to any one of the first aspect or the implementations of the first aspect; or perform the method according to any one of the third aspect or the implementations of the third aspect. The storage module may be a storage module (for example, a register or a cache) in the chip, or may be a storage module (for example, a read-only memory or a random access memory) that is in the terminal device and that is located outside the chip.

According to a tenth aspect, an embodiment of this application provides a communication apparatus. The communication apparatus may be the access network device in the foregoing implementations, or may be a chip in the access network device. The communication apparatus may include a processing module and a transceiver module. When the communication apparatus is the access network device, the processing module may be a processor, and the transceiver module may be a transceiver. The access network device may further include a storage module, and the storage module may be a memory. The storage module is configured to store instructions. The processing module executes the instructions stored in the storage module to enable the terminal device to perform the method according to any one of the second aspect or the implementations of the second aspect; or perform the method according to any one of the fourth aspect or the implementations of the fourth aspect. When the communication apparatus is the chip in the access network device, the processing module may be a processor, and the transceiver module may be an input/output interface, a pin, a circuit, or the like. The processing module executes instructions stored in a storage module to enable the terminal device to perform the method according to any one of the second aspect or the implementations of the second aspect; or perform the method according to any one of the fourth aspect or the implementations of the fourth aspect. The storage module may be a storage module (for example, a register or a cache) in the chip, or may be a storage module (for example, a read-only memory or a random access memory) that is in the access network device and that is located outside the chip.

According to an eleventh aspect, this application provides a communication apparatus. The apparatus may be an integrated circuit chip. The integrated circuit chip includes a processor. The processor is coupled to a memory. The memory is configured to store a program or instructions. When the program or the instructions is/are executed by the processor, the communication apparatus is enabled to perform the method according to any one of the implementations of the foregoing aspects.

According to a twelfth aspect, an embodiment of this application provides a computer program product including instructions. When the computer program product runs on a computer, the computer is enabled to perform the method according to any one of the implementations of the foregoing aspects.

According to a thirteenth aspect, an embodiment of this application provides a computer-readable storage medium, including instructions. When the instructions are run on a computer, the computer is enabled to perform the method according to any one of the implementations of the foregoing aspects.

According to a fourteenth aspect, an embodiment of this application provides a communication system. The communication system includes the terminal device according to any one of the first aspect or the implementations of the first aspect and the access network device according to any one of the second aspect or the implementations of the second aspect. Alternatively, the communication system includes the terminal device according to any one of the third aspect or the implementations of the third aspect and the access network device according to any one of the fourth aspect or the implementations of the fourth aspect.

**BRIEF DESCRIPTION OF DRAWINGS**

FIG. 1A is a diagram of a network architecture to which a cell search method is applicable according to this application;
FIG. 1B is a diagram of another network architecture to which a cell search method is applicable according to this application;
FIG. 1C is a diagram of another network architecture to which a cell search method is applicable according to this application;
FIG. 1D is a diagram of another network architecture to which a cell search method is applicable according to this application;
FIG. 2 is a flowchart of a cell search method according to this application;
FIG. 3 is another flowchart of a cell search method according to this application;
FIG. 4 is an example diagram of a reference geographical location and a distance threshold according to this application;

FIG. 5 is another flowchart of a cell search method according to this application;

FIG. 6 is an example diagram of a geographical area indicated by geographical area information corresponding to a TN neighboring cell according to this application;

FIG. 7 is another flowchart of a cell search method according to this application;

FIG. 8 is a diagram of an embodiment of a communication apparatus according to this application;

FIG. 9 is a diagram of another embodiment of a communication apparatus according to this application; and

FIG. 10 is a diagram of another embodiment of a communication apparatus according to this application.

## DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the terms used in such a manner are interchangeable in proper circumstances, so that the embodiments described herein can be implemented in other orders than the order illustrated or described herein. In addition, the terms "include" and "have" and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

For ease of understanding, the following first describes a system architecture and an application scenario of a cell search method provided in this application.

The cell search method provided in this application can be applied to a 5G NR (5G New Radio) system, the 6th generation mobile communication technology (the 6th generation mobile communication technology, 6G) system, and subsequent evolved standards. This is not limited in this application. The communication system includes at least a terminal device, an access network device, and a core network device.

The terminal device includes a device that provides voice and/or data connectivity to a user. For example, the terminal device may include a handheld device having a wireless connection function or a processing device connected to a wireless modem. The terminal device may communicate with a core network (for example, a 5G core (5th generation core, 5GC)) through a radio access network (radio access network, RAN) and may exchange voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile (mobile), a remote station (remote station), an access point (access point, AP), a remote terminal device (remote terminal), an access terminal device (access terminal), a user terminal device (user terminal), a user agent (user agent), a user device (user device), or the like. In addition, the terminal device may be a mobile phone (mobile phone), a tablet computer (Pad), a computer with a radio transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that a specific technology and a specific device form used for the terminal device are not limited in this embodiment of this application. The terminal device in this application may be any one of the foregoing devices or a chip. This is not specifically limited herein. Either being a device or a chip, the terminal device can be manufactured, sold, or used as an independent product. In this embodiment and subsequent embodiments, the terminal device is used as an example for description.

The access network device may be any device with a radio transceiver function and may be configured to be responsible for a function related to an air interface, for example, a radio link maintenance function, a radio resource management function, and some mobility management functions. In addition, the access network device may be further configured with a baseband unit (baseband unit, BBU), and has a baseband signal processing function. For example, the access network device may be an access network device (radio access network, RAN) that currently provides a service to the terminal device. Currently, some common examples of the access network device are a NodeB (NodeB, NB), an evolved NodeB (evolved NodeB, eNB), a next generation NodeB (next generation NodeB, gNB) in a 5G new radio (new radio, NR) system, a node (for example, an xNodeB) in a 6G system, a transmission and reception point (transmission and reception point, TRP), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), and the like. In addition, in a network structure such as a cloud access network (cloud radio access network, CloudRAN) or an open access network (open radio access network, ORAN), the access network device may be a device including a central unit (central unit, CU) (also referred to as a control unit) and/or a distributed unit (distributed unit, DU). A RAN device including a CU and a DU separates protocol layers of a gNB in an NR system. Functions of some protocol layers are centrally controlled by the CU, and functions of some or all of the remaining protocol layers are distributed in the DU, and the CU centrally controls the DU. It should be understood that the access network device in this embodiment of this application may be any one of the foregoing devices or a chip in the foregoing device. This is not specifically limited herein. Either being a device or a chip, the access network device can be manufactured, sold, or used as an independent product. In this embodiment and the subsequent embodiments, the access network device is used as an example for description.

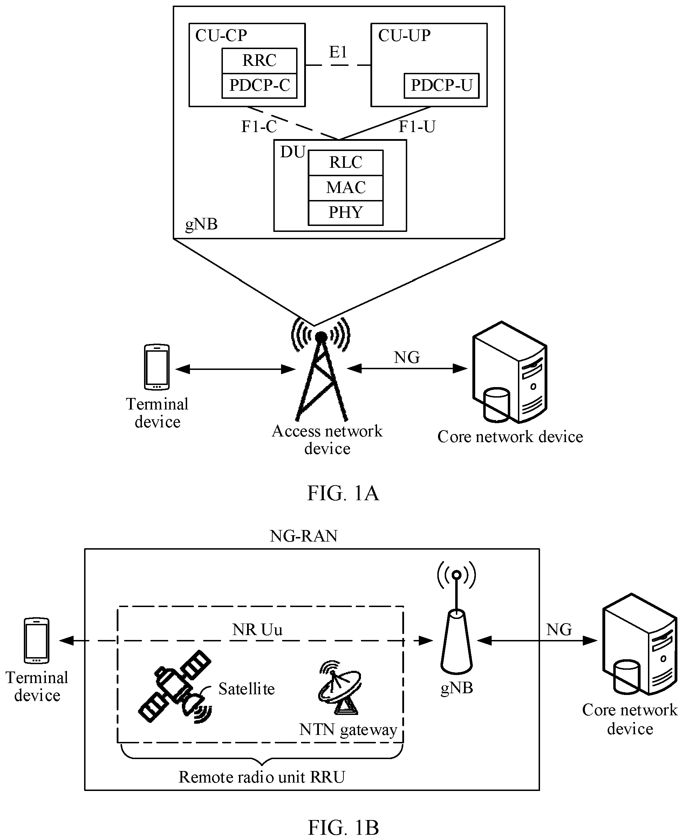

Optionally, when the access network device includes a CU and a DU, a plurality of DUs may share one CU. Division may be performed for the CUs and the DUs based on protocol stacks. For example, as shown in FIG. 1A, in a possible manner, a radio resource control (radio resource control, RRC) layer, a service data adaptation protocol (service data adaptation protocol, SDAP) layer, and a packet data convergence protocol (packet data convergence protocol, PDCP) layer are deployed in the CU, and other layers, namely, a radio link control (radio link control, RLC) layer, a media access control (media access control, MAC) layer, and a physical (physical, PHY) layer are deployed in the DU. The CU is connected to the DU through an F1 interface. The CU is connected to the core network through an NG interface on behalf of the gNB. The CU is connected to another gNB through an Xn interface on behalf of the gNB. In addition, on behalf of the gNB, the CU may be connected to another eNB through an X2 interface to perform a dual connectivity operation. Further, the CU may be further divided into a control plane (CU-CP) and a user plane (CU-UP). The CU-CP is responsible for a control plane function, and mainly includes RRC and a PDCP corresponding to the control plane (that is, a PDCP-C). The PDCP-C is mainly responsible for encryption, decryption, integrity protection, data transmission, and the like of control plane data. The CU-UP is responsible for a user plane function, and mainly includes an SDAP and a PDCP corresponding to the user plane (that is, a PDCP-U). The SDAP is mainly responsible for processing data of the core network and mapping a flow to a bearer. The PDCP-U is mainly responsible for encryption, decryption, integrity protection, header compression, serial number maintenance, data transmission, and the like of a data plane. The CU-CP is connected to the CU-UP through an E1 interface. The CU-CP, on behalf of the gNB, is connected to the core network through the NG interface and connected to the DU through an F1 interface-control plane (that is, F1-C). The CU-UP is connected to the DU through an F1 interface-user plane (that is, F1-U). In another possible implementation, the PDCP-C is also in the CU-UP. The control plane CU-CP of the CU further includes a further split architecture. In other words, the existing CU-CP is further split into a CU-CP 1 and a CU-CP 2. The CU-CP 1 includes various radio resource management functions (for example, mobility management and a specific value of each piece of information in a downlink RRC message sent to the terminal device). The CU-CP 2 includes only an RRC function (for example, being responsible for generating a downlink RRC message and decoding an uplink RRC message) and a PDCP-C function (that is, a basic function of control plane signaling at the PDCP layer).

The core network device is a device, in the core network (core network, CN), that provides service support for the terminal device. Currently, some common examples of the core network device are an access and mobility management function (access and mobility management function, AMF) entity, a session management function (session management function, SMF) entity, a user plane function (user plane function, UPF) entity, and the like. Details are not listed one by one herein. The AMF entity may be responsible for access management and mobility management of the terminal device. The SMF entity may be responsible for session management, for example, user session establishment. The UPF entity may be a functional entity on the user plane, and is mainly responsible for connecting to an external network. It should be noted that the entity in this application may also be referred to as a network element or a functional entity. For example, the AMF entity may also be referred to as an AMF network element or an AMF functional entity. For another example, the SMF entity may also be referred to as an SMF network element or an SMF functional entity. It should be noted that the core network device in this application includes at least an AMF entity.

For example, the cell search method provided in this application may be applied to a non-terrestrial network NTN architecture, for example, a non-terrestrial network based on an NG-RAN architecture (NTN-based NG-RAN architectures) defined in a 3GPP protocol. In this case, some or all functions of the access network device may be implemented through a non-terrestrial network device (for example, at least one of a satellite, a tethered uncrewed aerial vehicle (tethered unmanned aerial system, TUA), a lighter than air UAS (lighter than air, LTA), a heavier than air UAS (heavier than air UAS, HTA), or a high altitude platform station (high altitude platform station, HAPS)); or the access network device provides a service for the terminal device through a non-terrestrial network device. An access network device in the NTN architecture is referred to as an NTN access network device. It should be noted that in this application, an example in which the non-terrestrial network device is a satellite is used for description. However, this is not limited in this application. The non-terrestrial network device may alternatively be any other one of the foregoing. That is, the satellite described in the present invention may alternatively be replaced with any one of the foregoing non-terrestrial network devices. The following describes some common examples:

FIG. 1B shows an example of a RAN architecture based on a transparent transmission satellite (RAN architecture with transparent satellite). A terrestrial base station (for example, a terrestrial gNB) serves as an access network device. A satellite serves as a remote radio unit (remote radio unit, RRU) (also referred to as an L1 relay), has functions such as radio frequency conversion (frequency conversion) and frequency amplification (frequency amplification), and is configured to implement relay transparent transmission. An NTN gateway is configured to forward a signal from the satellite or a signal from the access network device. The NTN gateway is located on the ground. In this network structure, the terminal device sends an NR Uu radio interface signal to the access network device through satellite relay transparent transmission and forwarding by the NTN gateway. After receiving the signal, the terrestrial access network device communicates with the terrestrial core network device according to a terrestrial network technology in the conventional technology. Similarly, when the core network device sends a signal to the terminal device, a terrestrial base station (for example, a terrestrial gNB) is also used as an access network device, and a satellite is also used to implement relay transparent transmission of the signal. Details are similar to the foregoing process and are not described herein again. In this example, the terrestrial base station, the satellite, and the NTN gateway form an NTN access network device.

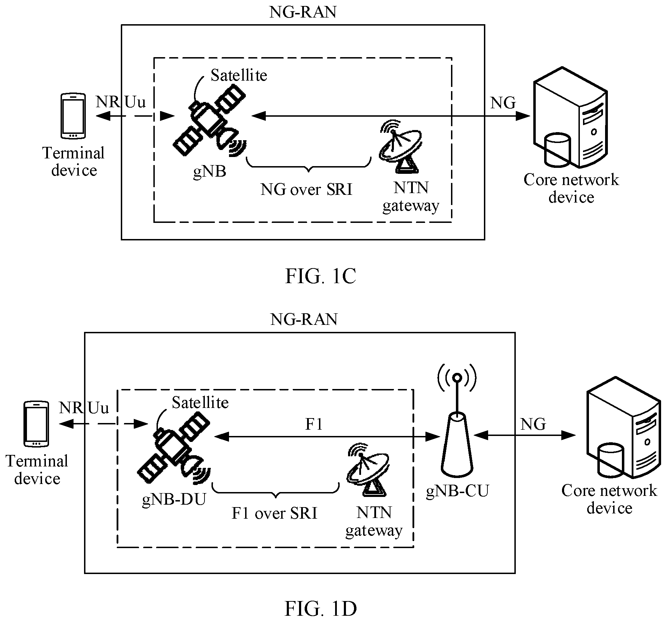

FIG. 1C shows an example of a RAN architecture based on a regenerative satellite (regenerative satellite). The satellite serves as an access network device or the satellite has a function of an access network device. In this network structure, a terrestrial terminal device sends a Uu radio interface signal to the access network device (that is, the satellite) through a service link (service link) between the terrestrial terminal device and the satellite. The satellite, as the access network device, receives the Uu radio interface signal from the terminal device, and parses the received signal. The satellite, as the access network device, exchanges information with a terrestrial NTN gateway through a feeder link (feeder link). For example, the satellite exchanges NG interface information with a terrestrial core network device. The satellite generates NG interface information and sends the NG interface information to the core network through the terrestrial NTN gateway. Similarly, the core network device generates NG interface information, and sends the NG interface information to the satellite through the terrestrial NTN gateway. In this example, the satellite generates the following signals: a signal of a Uu radio interface and a signal of a satellite radio interface (satellite radio interface, SRI) on a feeder link between the NTN gateway and the satellite. In this example, optionally, the satellite and the NTN gateway form an NTN access network device.

FIG. 1D shows another example of a RAN architecture based on a regenerative satellite (regenerative satellite). The satellite serves as a DU of an access network device, and a terrestrial base station (for example, a gNB-CU) serves as a CU of the access network device. In this network structure, a terrestrial terminal device sends a Uu radio interface signal to the DU (that is, the satellite) of the access network device through a service link (service link) between the terrestrial terminal device and the satellite. The DU (that is, the satellite) of the access network device receives and parses the NR-Uu radio interface signal from the terminal device. For example, the DU of the access network device generates F1 information, and the DU of the access network device sends the F1 interface information to the CU of the access network device through a feeder link and an NTN gateway. The CU of the access network device generates F1 interface information, and the CU of the access network device sends the F1 interface information to the DU of the access network device through the NTN gateway and the feeder link. The CU of the terrestrial access network device communicates with a terrestrial core network device according to a terrestrial network technology in the conventional technology. In this example, the satellite generates the following signals: a signal of a Uu radio interface and a signal of a satellite radio interface on a feeder link between the NTN gateway and the satellite. The feeder link transmits the F1 interface information. In this example, the terrestrial base station, the satellite, and the NTN gateway form an NTN access network device.

It should be understood that the terrestrial base station in the examples shown in FIG. 1B, FIG. 1C, and FIG. 1D may be implemented through a gNB, or may be implemented through a base station of another network standard, for example, an evolved NodeB (evolved NodeB, eNB) or a node (for example, an xNodeB) in a 6G system. This is not specifically limited herein. Only some common NTN architectures are described herein. In addition to the NTN architecture shown in FIG. 1B, FIG. 1C, or FIG. 1D, the NTN access network device in this application may be applied to another NTN architecture. This is not limited herein. In addition, the network system in this application further includes a terrestrial network access network device (not shown in the figure). For function descriptions of the TN access network device, refer to the foregoing descriptions of the access network device. Details are not described herein again.

When NTN discontinuous coverage occurs, the terminal device is required to stop performing an idle mode task (not perform idle mode tasks) when the terminal device is not within a coverage area of an NTN cell. The idle mode task (idle mode tasks) (also referred to as an idle-mode task or an access stratum (access stratum, AS) side function) mainly includes functions such as cell search (including searching for an NTN cell and/or a TN cell) and cell camping (including attempting to camp on the NTN cell and/or the TN cell) performed by the terminal device. In other words, after the terminal device stops performing the idle mode task, the terminal device cannot perform a function related to a terminal access stratum, such as cell search. However, a communication system not only includes an NTN, but also may include a TN. Directly stopping performing the idle mode task may affect connection of the terminal device to the TN, affecting communication experience.

In view of this, this application provides a cell search method and a communication apparatus, to improve a probability that a terminal device finds a TN in an NTN discontinuous coverage scenario, thereby helping improve communication experience.

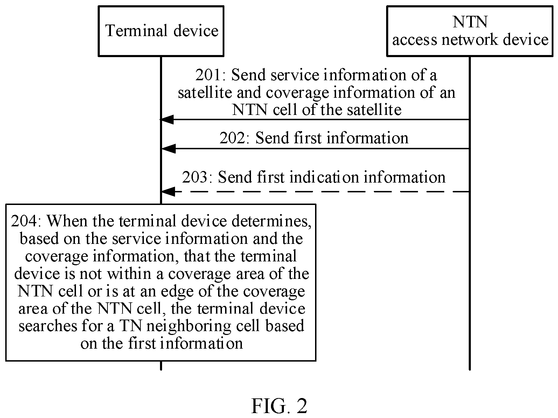

A main procedure of the cell search method provided in this application is described below with reference to FIG. 2. An access network device and a terminal device in the method may be applicable to the NTN shown in any one of the examples in FIG. 1B, FIG. 1C, and FIG. 1D, and the access network device is an NTN access network device. Specifically, the NTN access network device and the terminal device perform the following steps.

Step 201: The NTN access network device sends service information of a satellite and coverage information of an NTN cell of the satellite, and correspondingly, the terminal device receives the service information of the satellite and the coverage information of the NTN cell of the satellite.

Optionally, the NTN access network device broadcasts the service information of the satellite and the coverage information of the NTN cell of the satellite. For example, the terminal device obtains the service information of the satellite and the coverage information of the NTN cell of the satellite from a system broadcast message of the NTN access network device.

The service information (service information) includes ephemeris information and/or service start time information. The ephemeris information (also referred to as ephemeris data (ephemeris data) or an ephemeris) is used to indicate orbital information of the operating satellite. The terminal device may determine a location of the satellite according to the orbital information. For example, the ephemeris information may be represented in a two-line orbital data (two-line orbital element, TLE) format. Optionally, the ephemeris information of the satellite includes ephemeris information of a serving satellite and/or ephemeris information of a neighboring satellite. The serving satellite is a satellite that currently provides a service for the terminal device. The neighboring satellite is an incoming (incoming) satellite that provides a service for the terminal device. Generally, the terminal device can determine, based on the ephemeris information of the serving satellite, when the serving satellite leaves a specific location in a satellite orbit to stop providing a service for the terminal device, and can determine, based on the ephemeris information of the neighboring satellite, when the serving satellite arrives at a specific location in the satellite orbit to serve as the serving satellite to continue to provide a service for the terminal device. The service start time information indicates a time at which the satellite starts to provide a service for a terminal device in a geographical area. Optionally, the service start time information includes a time at which the neighboring satellite starts to provide a service for a terminal device in a geographical area. Optionally, the geographical area is a geographical area covered by the serving satellite.

The coverage information of the NTN cell is information related to coverage of the NTN cell of the NTN access network device corresponding to the satellite. Optionally, the coverage information of the NTN cell indicates an NTN cell coverage area of the serving satellite and/or an NTN cell coverage area of the neighboring satellite. Optionally, the coverage information of the NTN cell includes coverage information of a moving cell (moving cell) and/or coverage information of a quasi-earth fixed cell (quasi-earth fixed cell). The moving cell is an NTN cell whose coverage area slides (slide) on the ground (that is, coverage of a cell of a satellite can move or slide on the ground). Generally, a transmit angle is not adjusted for a beam of a satellite of the moving cell. As the satellite operates in a satellite orbit, cell coverage is in a moving state without staying in a fixed area. The quasi-earth fixed cell is a concept opposite to the moving cell. The quasi-earth fixed cell is an NTN cell whose satellite coverage can be fixed in an area on the ground within a period of time. Generally, a transmit angle may be adjusted for a beam of the quasi-earth fixed cell. As a satellite operates in a satellite orbit, the satellite may stare at a fixed area on the ground for a period of time. In this period of time, a cell range and a location of the quasi-earth fixed cell are fixed. For example, the coverage information of the moving cell is an elevation (elevation) of the moving cell and/or a cell coverage radius of the moving cell. The elevation may include a leftmost elevation and a rightmost elevation with reference to a moving direction of the satellite. For example, the coverage information of the quasi-earth fixed cell is a reference location of the quasi-earth fixed cell and a cell coverage radius of the quasi-earth fixed cell. The reference location of the quasi-earth fixed cell may be a central location of a ground area covered by the cell and may be represented by longitude and latitude. In addition, the cell coverage radius is a distance between the foregoing reference location and an edge covered by the foregoing cell.

Optionally, the NTN access network device may broadcast the service information of the satellite and the coverage information of the NTN cell of the satellite in a same broadcast message, or may broadcast the service information of the satellite and the coverage information of the NTN cell of the satellite in different broadcast messages. Optionally, the NTN access network device broadcasts information about the neighboring satellite (for example, service information of the neighboring satellite and coverage information of the NTN cell of the neighboring satellite) and information about the serving satellite (for example, service information of the serving satellite and coverage information of the NTN cell of the serving satellite) in different broadcast messages. For example, the service information of the neighboring satellite and the coverage information of the NTN cell of the neighboring satellite are broadcast in a broadcast message #1, and the service information of the serving satellite and the coverage information of the NTN cell of the serving satellite are broadcast in a broadcast message #2.

In this embodiment, after the terminal device receives the service information of the satellite and the coverage information of the NTN cell of the satellite, the terminal device may determine a ground coverage status of the NTN cell of the NTN access network device based on the service information of the satellite and the coverage information of the NTN cell of the satellite. With reference to a geographical location of the terminal device, the terminal device can determine whether the terminal device is within a coverage area of the NTN cell of the NTN access network device, or whether the terminal device moves to an edge of the coverage area of the NTN cell. The edge of the coverage area of the NTN cell may be understood as follows: When signal quality detected by the terminal device is lower than a threshold, it is considered that the terminal device is at the edge of the coverage area of the NTN cell. Alternatively, when signal quality detected by the terminal device is lower than a threshold, the terminal device is located in the NTN cell. When the terminal device moves in a direction away from the NTN cell, the signal quality detected by the terminal device continues to degrade.

Optionally, the NTN access network device further broadcasts a satellite identifier (satellite ID).

Step 202: The NTN access network device sends first information, and correspondingly, the terminal device receives the first information.

Optionally, the NTN access network device broadcasts the first information. For example, the terminal device obtains the first information from a system broadcast message of the NTN access network device.

It should be noted that during actual application, the NTN access network device may broadcast the first information, the service information of the satellite, and the coverage information of the NTN cell of the satellite through a same broadcast message, or may broadcast the first information, the service information of the satellite, and the coverage information of the NTN cell of the satellite through different broadcast messages. This is not specifically limited in this application.

The first information indicates the terminal device to search for a TN neighboring cell. The searching for a TN neighboring cell means that the terminal device starts a process of searching for a TN cell on which the terminal device can camp. The terminal device may find a TN neighboring cell (that is, find a TN neighboring cell on which the terminal device can camp), or may not find a TN neighboring cell (that is, find no TN neighboring cell on which the terminal device can camp). It should be noted that after the terminal device camps on the TN cell, the terminal device may subsequently access the TN cell. Optionally, the first information may further indicate the terminal device to access the TN neighboring cell.

Optionally, when receiving the first information, the terminal device triggers searching for a TN neighboring cell, or after receiving the first information, the terminal device triggers searching for a TN neighboring cell under a specific condition. For example, after receiving the first information, and when the terminal device is not within the coverage area of the NTN cell or is at the edge of the coverage area of the NTN cell, the terminal device triggers searching for the TN neighboring cell.

In addition, in addition to indicating the terminal device to search for a TN neighboring cell, the first information can further provide, to the terminal device, information that may be used by the terminal device during the search for a TN neighboring cell. Based on different contents provided by the first information, there are the following implementations for the first information:

In a possible implementation, the first information includes TN neighboring cell indication information, search time indication information, and/or a distance threshold. The TN neighboring cell indication information indicates whether an NTN serving cell has a TN neighboring cell. The search time indication information indicates duration allowed by the terminal device for searching for the TN neighboring cell. The distance threshold is used to indicate to trigger execution of an idle mode task when a distance between a current geographical location of the terminal device and a reference geographic location reaches the distance threshold. The reference geographical location is a geographical location of the terminal device when the terminal device is triggered to perform a TN cell search due to discontinuous coverage of the NTN cell last time, or a geographical location of the terminal device when the terminal device is triggered to stop performing the idle mode task last time.

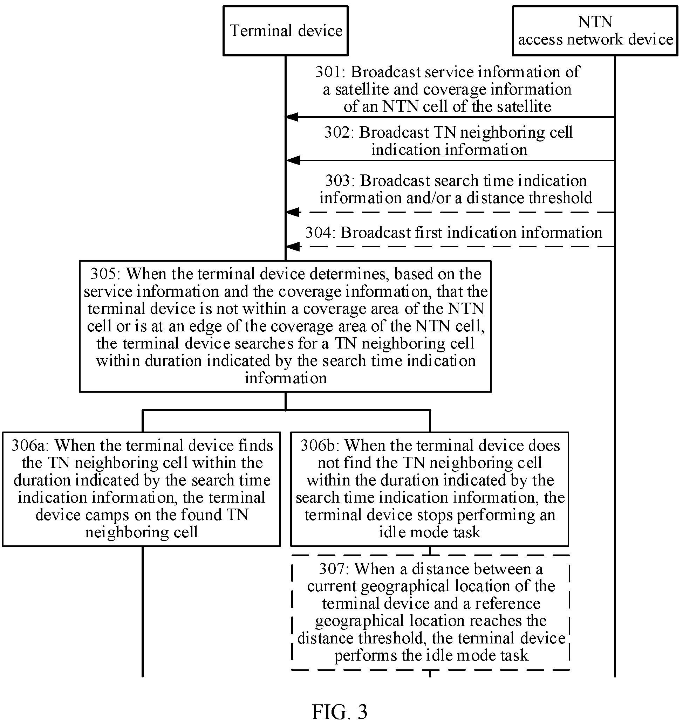

Specific explanations of the TN neighboring cell indication information, the search time indication information, and the distance threshold are described below in an embodiment corresponding to FIG. 3, and details are not described herein.

In another possible implementation, the first information includes geographical area information corresponding to the TN neighboring cell. The geographical area information corresponding to the TN neighboring cell indicates a geographical area in which there is at least one TN neighboring cell. Optionally, the first information further includes TN neighboring cell information. The TN neighboring cell information includes frequency information and/or cell identifier information of the TN neighboring cell.

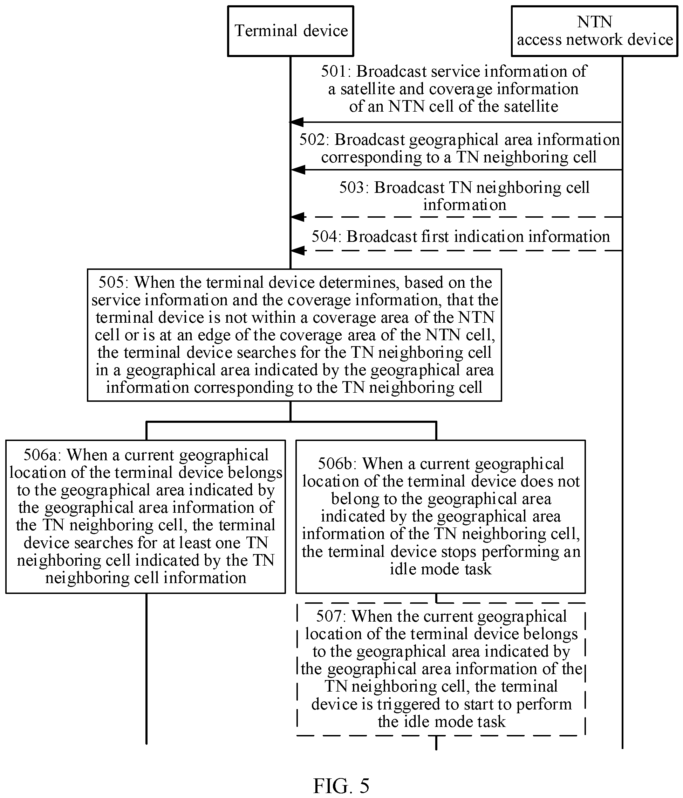

Specific explanations of the geographical area information corresponding to the TN neighboring cell and the TN neighboring cell information are described below in an embodiment corresponding to FIG. 5, and details are not described herein.

It should be noted that the NTN access network device may trigger sending of the first information only at a specific moment or under a specific condition. Specifically, the NTN access network device may send the first information in any one of the following cases.

In a possible implementation, the NTN access network device sends the first information within a preset time range before a service stop time of the NTN serving cell in which the terminal device is located.

That an NTN cell stops serving may be understood as follows: The NTN cell stops providing a service for a terminal device in a physical area currently served. A service stop time of the NTN cell is a moment at which the NTN cell stops providing a service for a terminal device in a physical area currently served. For example, the NTN cell is an NTN quasi-earth fixed cell, and a beam of the NTN access network device can fixedly cover a geographical area within a period of time. When the service stop time of the NTN cell arrives, the NTN cell no longer covers the geographical area.

In addition, the preset time range is used to indicate a duration interval between a moment at which the NTN access network device sends the first information and a service stop time of the NTN cell. The preset time range may be determined by the NTN access network device. It may be understood that the NTN access network device sends the first information before the NTN cell is to stop serving.

For example, the NTN access network device may serve a plurality of NTN cells. Each time a service of an NTN cell is to be stopped, the NTN access network device broadcasts the first information to a terminal device in the NTN cell. For a particular terminal device in the NTN cell, the NTN access network device sends the first information before the NTN serving cell in which the terminal device is located is to stop serving.

Optionally, when the NTN access network device sends the first information by using this implementation, the NTN access network device may further send the service stop time of the NTN cell. For example, the NTN access network device may add an information element "t-service" to a system broadcast message, and the information element "t-service" carries the service stop time of the NTN cell. Optionally, the service stop time may be sent before the first information, or may be sent after the first information, or may be sent at the same time with the first information. This is not limited herein.

Optionally, the NTN access network device may send the first information on a per cell basis by using this implementation. That is, the NTN access network device broadcasts the first information to each terminal device in the NTN cell, and each terminal device in the NTN cell receives the same first information.

In this implementation, the NTN access network device can send the first information when the NTN cell is to reach the service stop time, instead of continuously sending the first information in an entire cycle in which the NTN cell provides a service for the terminal device. This not only enables the terminal device to receive the first information exactly before the terminal device needs to use the first information, while not causing the terminal device to use the first information (to, for example, search for a TN cell based on the first information as described below) when there is still coverage of an NTN cell, but also helps reduce signaling overheads and can also reduce energy consumption caused by receiving signaling by the terminal device.

In another possible implementation, when the NTN access network device determines, based on the service information of the satellite and the coverage information of the NTN cell of the satellite, that the terminal device is to leave the coverage area of the NTN cell or is at the edge of the coverage area of the NTN cell, the NTN access network device triggers sending of the first information to the terminal device.

Optionally, this implementation may be applied to a scenario in which the NTN cell is a moving cell.

Because the NTN access network device can obtain the service information of the satellite and the coverage information of the NTN cell of the satellite, the NTN access network device can determine a ground coverage status of the NTN cell based on the service information of the satellite and the coverage information of the NTN cell of the satellite. In addition, because there is signaling exchange between the NTN access network device and the terminal device in the NTN cell, or the NTN access network device stores a context of the terminal device, the NTN access network device can learn of a geographical location of the terminal device, and the NTN access network device can determine, with reference to the geographical location of the terminal device, whether the terminal device is to leave the coverage area of the NTN cell of the NTN access network device and whether the terminal device moves to the edge of the coverage area of the NTN cell. In this case, the NTN access network device may send the first information to the terminal device through a dedicated RRC message.

Optionally, the NTN access network device may send the first information on a per terminal device basis by using this implementation. That is, the NTN access network device can determine, for a particular terminal device in an NTN cell, whether the terminal device is to leave a coverage area of the NTN cell of the NTN access network device, and whether the terminal device moves to an edge of the coverage area of the NTN cell, to send the first information to the terminal device. Different terminal devices in the NTN cell may receive different first information at different moments.

In this implementation, the NTN access network device can send the first information when the NTN cell is to reach the service stop time, instead of continuously sending the first information in an entire cycle in which the NTN cell provides a service for the terminal device. This not only enables the terminal device to receive the first information exactly before the terminal device needs to use the first information, while not causing the terminal device to use the first information (to, for example, search for a TN cell based on the first information as described below) when there is still coverage of an NTN cell, but also helps reduce signaling overheads and can also reduce energy consumption caused by receiving signaling by the terminal device.

Step 203: The NTN access network device sends first indication information, and correspondingly, the terminal device receives the first indication information.

Optionally, the NTN access network device broadcasts the first indication information. For example, the terminal device obtains the first indication information from a system broadcast message of the NTN access network device.

Step 203 is an optional step. When the NTN access network device performs step 203, the NTN access network device may broadcast the first information, the first indication information, the service information of the satellite, and the coverage information of the NTN cell of the satellite through a same broadcast message, or may separately broadcast the first information, the first indication information, the service information of the satellite, and the coverage information of the NTN cell of the satellite through different broadcast messages. This is not specifically limited in this application. It should be noted that when the first information, the first indication information, the service information of the satellite, and the coverage information of the NTN cell of the satellite are separately broadcast through different broadcast messages, there is no chronological order for the NTN access network device and the terminal device to perform step 201, step 202, and step 203.

The first indication information indicates to trigger a search for the TN neighboring cell based on the first information when the terminal device is not within the coverage area of the NTN cell or is at the edge of the coverage area of the NTN cell. This may also be understood as follows: The first indication information indicates a time at which the terminal device searches for the TN neighboring cell through the first information. The time is a moment at which either of a condition 1 (that is, the terminal device is not within the coverage area of the NTN cell) and a condition 2 (that is, the terminal device is at the edge of the coverage area of the NTN cell) is met.

The coverage area of the NTN cell may be determined by the terminal device based on the service information and the coverage information of the NTN cell. For details, refer to the related descriptions in step 201 above. Details are not described herein again.

In this implementation, the NTN access network device explicitly indicates, through the first indication information, the terminal device to search for the TN neighboring cell based on the first information only when it is determined that the terminal device is not within the coverage area of the NTN cell or is at the edge of the coverage area of the NTN cell, instead of immediately searching for the TN neighboring cell based on the first information upon receiving the first information. That is, when receiving the first information, the terminal device may not need to immediately start to search for the TN neighboring cell based on the first information. This helps prevent the terminal device from keeping searching for the TN neighboring cell when the terminal device receives the first information but is located in the coverage area of the NTN cell, thereby reducing energy consumption of the terminal device and improving power saving performance of the terminal device. In addition, the terminal device within the coverage area of the NTN cell may also be prevented from being connected to a TN as much as possible, thereby helping reduce load of the TN network.

Step 204: When the terminal device determines, based on the service information and the coverage information, that the terminal device is not within a coverage area of the NTN cell or is at an edge of the coverage area of the NTN cell, the terminal device searches for a TN neighboring cell based on the first information.

In this embodiment, after the terminal device receives the service information and the coverage information, the terminal device may detect (for example, perform periodic detection or perform event-triggered detection on) whether the terminal device is within the coverage area of the NTN cell or whether the terminal device is at the edge of the coverage area of the NTN cell. When either of the condition 1 (that is, the terminal device is not within the coverage area of the NTN cell) and the condition 2 (that is, the terminal device is at the edge of the coverage area of the NTN cell) is met, the terminal device triggers a search for the TN neighboring cell based on the first information, that is, the terminal device searches, through the first information, for the TN neighboring cell on which the terminal device can camp.

It should be noted that the NTN cell includes an NTN serving cell and an NTN neighboring cell. That the terminal device is not within the coverage area of the NTN cell means that the terminal device is neither within a coverage area of the NTN serving cell nor within a coverage area of the NTN neighboring cell. That the terminal device is at the edge of the coverage area of the NTN cell means that the terminal device is at an edge of a coverage area of an NTN network, that is, the terminal device is to be without coverage of the NTN cell. For example, the terminal device is at the edge of the coverage area of the NTN serving cell or at the edge of the coverage area of the NTN neighboring cell of the terminal device.

Optionally, searching for a TN neighboring cell is a process in which the terminal device searches for a TN neighboring cell on which the terminal device can camp within a range (for example, a time range or a geographical area). Based on the first information, the terminal device may find a TN neighboring cell (that is, the terminal device finds a TN neighboring cell on which the terminal device can camp), or may find no TN neighboring cell (that is, the terminal device does not find a TN neighboring cell on which the terminal device can camp). When the terminal device cannot find the TN neighboring cell within a specified search time and/or a specified search area, the terminal device stops performing an idle mode task (that is, stops performing an idle-mode task, or disables an AS-side function).

Optionally, that the terminal device stops performing an idle mode task may be specifically represented as that the terminal device stops performing a cell search (including an NTN cell search and a TN cell search), stops camping on a cell, and does not access a cell. Optionally, that the terminal device stops performing an idle mode task may alternatively be represented as that the terminal device disables a TN radio frequency module and an NTN radio frequency module.

It should be understood that the specified search time and/or the specified search area is related to a specific implementation of the first information, and this is to be described below in detail in embodiments corresponding to FIG. 3 and FIG. 5. Details are not described herein.

It should be noted that the terminal device searches for the TN neighboring cell based on the first information only when the terminal device is not within the coverage area of the NTN cell or is at the edge of the coverage area of the NTN cell, and this may be determined by the terminal device based on the first indication information. In this case, the NTN access network device needs to perform step 203. Alternatively, this may be specified in a protocol. In this case, the NTN access network device does not need to perform step 203.

Optionally, the foregoing description "when the terminal device determines, based on the service information and the coverage information, that the terminal device is not within the coverage area of the NTN cell or is at the edge of the coverage area of the NTN cell" may be replaced with the description "when the terminal device determines, based on the service information and the coverage information, that the terminal device is to be outside the coverage area of the NTN cell or is to be at the edge of the coverage area of the NTN cell".

It should be further noted that in this embodiment, if the NTN access network device is an access network device in a CU-DU split architecture, information (for example, the service information, the coverage information of the NTN cell, the first information, and the first indication information that are described above) sent by the NTN access network device to the terminal device may be generated or obtained by a CU and sent to the terminal device through a DU. Optionally, if the CU includes a CU-CP 1, a CU-CP 2, and a CU-UP, the CU-CP 1 generates or obtains the foregoing information (for example, the service information, the coverage information of the NTN cell, the first information, and the first indication information that are described above), and sends the information to the CU-CP 2. Then, the CU-CP 2 encapsulates, based on a protocol encapsulation function, the information to be sent to the terminal device, and sends encapsulated information to the terminal device through the DU.

Optionally, a process in which the CU sends information (for example, the service information, the coverage information of the NTN cell, the first information, and the first indication information that are described above) to the terminal device through the DU may be a process in which the DU transparently transmits the information to the terminal device. To be specific, the DU directly sends the information received from the CU to the terminal device without modifying the information. Alternatively, the DU may modify the information received from the CU with reference to information that is related to the information and that can be obtained by the DU, and then the DU sends the modified information to the terminal device. Optionally, when the latter is used for implementation, the DU may send the modified information to the CU, for the CU to align the information with the DU.

For example, a process in which the CU sends the first information to the terminal device through the DU may be that the CU in the NTN access network device generates the first information, and the DU in the NTN access network device directly and transparently transmits the first information to the terminal device.

For example, a process in which the CU sends the first indication information to the terminal device through the DU may be that the CU in the NTN access network device generates the first indication information, and the DU in the NTN access network device directly and transparently transmits the first indication information to the terminal device.

For example, a process in which the CU sends the service information and the coverage information of the NTN cell to the terminal device through the DU may be that the CU in the NTN access network device generates the service information and the coverage information of the NTN cell. However, the DU stores updated and more accurate service information and/or coverage information of the NTN cell. In this case, the DU may send the updated service information and/or the updated coverage information of the NTN cell to the terminal device. Optionally, the DU may feed back the updated service information and/or the updated coverage information of the NTN cell to the CU, for the CU to align the service information and the coverage information of the NTN cell with the DU.

For example, a process in which the CU sends the service information and the coverage information of the NTN cell to the terminal device through the DU may alternatively be that the CU directly and transparently transmits the generated service information and the generated coverage information of the NTN cell to the terminal device through the DU, and the DU is unaware of the service information and the coverage information of the NTN cell.

In this application, because the terminal device can receive the first information that indicates the terminal device to search for a TN neighboring cell, even if the terminal device is not within the coverage area of the NTN cell or the terminal device is located at the edge of the coverage area of the NTN cell, the terminal device can search for the TN neighboring cell based on the first information, instead of immediately stopping performing an idle mode task. Therefore, this helps increase a probability that the terminal device finds a TN in an NTN discontinuous coverage scenario, thereby helping improve communication experience.

An embodiment of a cell search method provided in this application is further described below with reference to FIG. 3. In this embodiment, a terminal device can search for a TN cell within a specified search time. For example, first information may indicate the specified search time. Specifically, an NTN access network device and the terminal device perform the following steps:

Step 301: The NTN access network device broadcasts service information of a satellite and coverage information of an NTN cell of the satellite, and correspondingly, the terminal device receives the service information of the satellite and the coverage information of the NTN cell of the satellite.

Step 301 is similar to step 201. For details, refer to the related descriptions in step 201. Details are not described herein again.

In this embodiment, the first information includes TN neighboring cell indication information, search time indication information, and/or a distance threshold. Specifically, the terminal device may obtain the TN neighboring cell indication information, the search time indication information, and the distance threshold in a manner described below in step 302 and step 303.

Step 302: The NTN access network device broadcasts TN neighboring cell indication information; and correspondingly, the terminal device receives the TN neighboring cell indication information.

The TN neighboring cell indication information indicates whether an NTN serving cell has a TN neighboring cell, that is, indicate whether there is a TN neighboring cell in a geographical area in which the NTN serving cell is located, and/or whether there is a TN neighboring cell near the geographical area in which the NTN serving cell is located.

In a possible implementation, the TN neighboring cell indication information received by the terminal device indicates that the NTN serving cell has a TN neighboring cell.

In another possible implementation, the TN neighboring cell indication information received by the terminal device indicates that the NTN serving cell does not have a TN neighboring cell.

It should be understood that, when the NTN access network device determines that the NTN serving cell has a TN neighboring cell, the NTN access network device not only broadcasts the TN neighboring cell indication information indicating that the NTN serving cell has a TN neighboring cell, but also performs step 303 (that is, broadcasts the search time indication information and/or the distance threshold). When the NTN access network device determines that the NTN serving cell does not have a TN neighboring cell, the NTN access network device broadcasts only the TN neighboring cell indication information indicating that the NTN serving cell does not have a TN neighboring cell, and does not perform step 303 (that is, does not broadcast the search time indication information and the distance threshold).

Optionally, the NTN access network device further broadcasts frequency information of a TN neighboring cell and/or cell identifier information of the TN neighboring cell. For descriptions of the frequency information of the TN neighboring cell and the cell identifier information of the TN neighboring cell, refer to related descriptions in step 503 below.

Step 303: The NTN access network device broadcasts search time indication information and/or a distance threshold, and correspondingly, the terminal device receives the search time indication information and/or the distance threshold.

Step 303 is an optional step.

The search time indication information indicates duration allowed by the terminal device for searching for the TN neighboring cell, that is, maximum duration between a moment at which the terminal device starts to search for a TN neighboring cell to a moment at which the terminal device stops searching for the TN neighboring cell. For example, the duration indicated by the search time indication information is T1, and the terminal device, when starting to search for the TN neighboring cell, may start a timer 1 with duration of T1. During running of the timer 1, the terminal device continuously searches for the TN neighboring cell until the timer 1 expires.

Optionally, the NTN access network device may determine the search time indication information based on information such as a quantity of TN neighboring cells. For example, if the quantity of TN neighboring cells is relatively large (for example, the quantity of TN neighboring cells is greater than or equal to a threshold), the NTN access network device sets relatively short duration as the search time indication information. Alternatively, if the quantity of TN neighboring cells is relatively small (for example, the quantity of TN neighboring cells is less than or equal to a threshold), the NTN access network device sets relatively long duration as the search time indication information.

In this embodiment, the NTN access network device sends the search time indication information to the terminal device, to limit a time consumed by the terminal device in searching for a TN neighboring cell, so that the terminal device can perform a search within a search time configured on a network side, and the terminal device can be prevented from continuously searching when the terminal device does not find a TN neighboring cell on which the terminal device can camp. Therefore, this helps reduce energy consumption of the terminal device.

The distance threshold is used to indicate to perform an idle mode task when a distance between a current geographical location of the terminal device and a reference geographical location reaches the distance threshold. The reference geographical location is a geographical location of the terminal device when the terminal device is triggered to perform a TN cell search due to discontinuous coverage of the NTN cell last time, or a geographical location of the terminal device when stopping of performing an idle mode task is last triggered. A specific purpose of the distance threshold is described in step 307, and details are not described herein.

Optionally, the NTN access network device may determine the distance threshold based on information such as a quantity of TN neighboring cells and a distance between different TN neighboring cells. For example, if the quantity of TN neighboring cells is relatively large and the distance between different TN neighboring cells is relatively short, the NTN access network device sets a relatively short distance as the distance threshold. Alternatively, if the quantity of TN neighboring cells is relatively small and the distance between different TN neighboring cells is relatively long, the NTN access network device sets a relatively long distance as the distance threshold.

In addition, the terminal device may obtain the search time indication information and the distance threshold through any one of the following implementations.

In a possible implementation, the NTN access network device broadcasts the search time indication information, and the terminal device receives the search time indication information through a system broadcast message. In addition, the terminal device determines the distance threshold. For example, the terminal device uses a preset distance as the distance threshold. For example, the terminal device determines the distance threshold based on a feature of a geographical location of the terminal device. For example, if the terminal device is far away from a coast, the terminal device determines a relatively long distance as the distance threshold. Alternatively, if the terminal device is near a coast, the terminal device determines a relatively short distance as the distance threshold.

In another possible implementation, the NTN access network device broadcasts the distance threshold, and the terminal device receives the distance threshold through a system broadcast message. In addition, the terminal device determines the search time indication information. For example, the terminal device uses preset duration as the search time indication information. For example, the terminal device determines the search time indication information based on a current communication requirement. For example, if the terminal device determines, based on a current service type, that there is a requirement for frequently receiving and sending data, the terminal device determines relatively long duration as the search time indication information. Alternatively, if the terminal device determines, based on a current service type, that there is a relatively small requirement for receiving and sending data, the terminal device determines relatively short duration as the search time indication information.

In another possible implementation, the NTN access network device broadcasts the search time indication information and the distance threshold, and the terminal device receives the search time indication information and the distance threshold through a system broadcast message.

In this embodiment, when the NTN access network device performs step 303, there is no chronological order for performing step 303 and step 302. The NTN access network device may first perform step 302 and then perform step 303, or may first perform step 303 and then perform step 302, or may perform step 302 and step 303 at the same time. In addition, when the NTN access network device performs step 302 and step 303 at the same time, the NTN access network device may separately send the TN neighboring cell indication information, the search time indication information, and the distance threshold through different messages, or may send the TN neighboring cell indication information, the search time indication information, and the distance threshold through a same message. This is not specifically limited herein.

Step 304: The NTN access network device broadcasts first indication information, and correspondingly, the terminal device receives the first indication information.

Step 304 is an optional step. Step 304 is similar to step 203. For details, refer to the related descriptions in step 203. Details are not described herein again.

Step 305: When the terminal device determines, based on the service information and the coverage information, that the terminal device is not within a coverage area of the NTN cell or is at an edge of the coverage area of the NTN cell, the terminal device searches for a TN neighboring cell within duration indicated by the search time indication information.

In this embodiment, after the terminal device receives the service information of the satellite and the coverage information of the NTN cell of the satellite, the terminal device may determine a ground coverage status of the NTN cell of the NTN access network device based on the service information of the satellite and the coverage information of the NTN cell of the satellite. With reference to the geographical location of the terminal device, the terminal device can determine whether the terminal device is within the coverage area of the NTN cell of the NTN access network device, or whether the terminal device moves to the edge of the coverage area of the NTN cell. For descriptions of how the terminal device determines that the terminal device is not within the coverage area of the NTN cell or is at the edge of the coverage area of the NTN cell, refer to the related descriptions in step 204 above. Details are not described herein again.

For example, the duration indicated by the search time indication information is T1. When the terminal device determines that the terminal device is not within the coverage area of the NTN cell or is at the edge of the coverage area of the NTN cell, the terminal device starts to search for a TN neighboring cell and starts a timer 1 with duration of T1. During running of the timer 1, the terminal device continuously searches for a TN neighboring cell until the timer 1 expires. If the terminal device finds a TN neighboring cell (that is, the terminal device finds a TN neighboring cell on which the terminal device can camp) during the running of the timer 1, the terminal device performs step 306a. If the terminal device does not find a TN neighboring cell (that is, the terminal device does not find a TN neighboring cell on which the terminal device can camp) during the running of the timer 1, after the timer 1 expires, the terminal device performs step 306b. Optionally, the terminal device records a geographical location of the terminal device when the timer 1 expires, and stores the geographical location as a reference geographical location.

It should be noted that, in this embodiment, a geographical area in which the terminal device searches for a TN neighboring cell is not limited, that is, a geographical area in which the terminal device searches for a TN neighboring cell is not limited. For example, within the duration indicated by the search time indication information, the terminal device may search for a TN neighboring cell near the geographical location of the terminal device. If the terminal device can move, the geographical location of the terminal device also changes as the terminal device moves.

Step 306a: When the terminal device finds a TN neighboring cell within the duration indicated by the search time indication information, the terminal device camps on the found TN neighboring cell.

Specifically, the terminal device attempts to camp on the found TN neighboring cell. Optionally, when the TN neighboring cell is not a cell that prohibits access, the terminal device accesses the TN neighboring cell, so that the terminal device is connected to a TN network through the TN neighboring cell.

Step 306b: When the terminal device does not find a TN neighboring cell within the duration indicated by the search time indication information, the terminal device stops performing an idle mode task.

For descriptions of stopping performing an idle mode task, refer to the related descriptions in step 204 above. Details are not described herein again.

Optionally, the terminal device records a geographical location of the terminal device when the terminal device triggers stopping of performing the idle mode task, and stores the geographical location as a reference geographical location.

Optionally, if the terminal device can move, the terminal device may further perform step 307 after performing step 306b.

Optionally, step 307 may alternatively not depend on steps 306a and 306b. For example, after the terminal device stops performing the idle mode task based on discontinuous coverage of an NTN network, if the terminal device can obtain the reference geographical location and the distance threshold, the terminal device may also perform step 307.

Step 307: When a distance between a current geographical location of the terminal device and a reference geographical location reaches the distance threshold, the terminal device performs an idle mode task.

Step 307 is an optional step.

In a possible implementation, the reference geographical location is a geographical location of the terminal device when the terminal device is triggered to perform a TN cell search due to discontinuous coverage of the NTN cell last time, or a geographical location of the terminal device when the terminal device is triggered to stop performing the idle mode task last time. For example, if the terminal device does not find a TN neighboring cell within the duration indicated by the search time indication information, the terminal device not only stops performing an idle mode task, but also determines a geographical location of the terminal device when the terminal device stops performing the idle mode task as the reference geographical location. For another example, when the terminal device stops performing the idle mode task based on discontinuous coverage of an NTN network or performs a TN cell search triggered by discontinuous coverage of the NTN cell, the geographical location of the terminal device is determined as a reference geographical location #1. When the terminal device reaches a geographical location E due to movement, if a distance between the geographical location E and the reference geographical location #1 exceeds the distance threshold, the terminal device performs the idle mode task (for example, the terminal device searches for a TN cell). The terminal device uses the geographical location E as a new reference geographical location, which is referred to as a reference geographical location #2. If no TN cell is found when the terminal device performs the idle mode task, the terminal device stops performing the idle mode task. When the terminal device subsequently reaches a geographical location F due to movement, if a distance between the geographical location E and the reference geographical location #2 exceeds the distance threshold, the terminal device re-performs the idle mode task. The terminal device uses the geographical location F as a new reference geographical location. Then, the foregoing mechanism is used.

In another possible implementation, the reference geographical location is a geographical location of the terminal device when a timer 1 in the terminal device expires, and duration of the timer 1 is the duration indicated by the search time indication information. For example, when the terminal device starts to search for a TN neighboring cell, the terminal device starts the timer 1 and continuously searches for the TN neighboring cell during running of the timer 1. When the timer 1 expires, the terminal device determines a current geographical location as the reference geographical location.

It should be noted that the terminal device may determine the reference geographical location by using any one of the foregoing implementations. Optionally, the reference geographical locations determined in the foregoing two implementations may be a same geographical location.

In addition, that the terminal device performs an idle mode task (that is, the terminal device performs an idle-mode task, or enables an AS-side function) may be specifically represented as that the terminal device starts to perform a cell search. Optionally, the terminal device may start to search for a TN neighboring cell, or may start to search for an NTN neighboring cell. For example, if the terminal device may further determine, based on the service information and the coverage information, whether the terminal device is within a coverage area of the NTN cell, or determine whether the terminal device is at an edge of the coverage area of the NTN cell, if the terminal device is not within the coverage area of the NTN cell or is at the edge of the coverage area of the NTN cell, the terminal device starts to search for a TN neighboring cell. Alternatively, if the terminal device is within the coverage area of the NTN cell, the terminal device starts to search for a neighboring NTN cell.

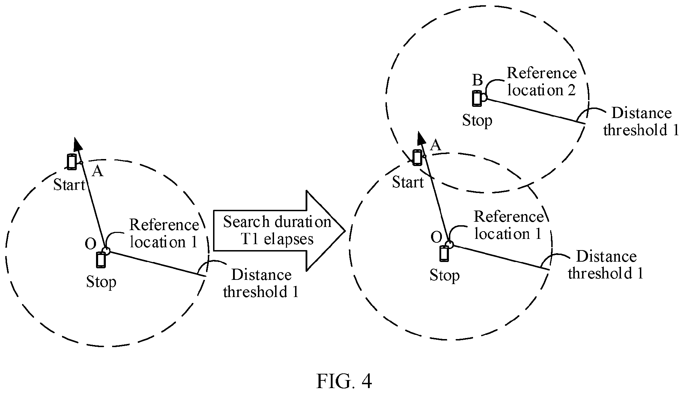

For ease of understanding, using FIG. 4 as an example, the search duration indicated by the search time indication information obtained by the terminal device is T1, and the distance threshold is a distance threshold 1. If the terminal device stops performing the idle mode task (that is, disables the AS-side function) at a point O, the terminal device stores the point O as the reference geographical location (that is, a reference location 1). As the terminal device moves, when the terminal device moves to a point A, and a distance between the point A and the reference location 1 (that is, the point O) reaches the distance threshold 1, the terminal device starts to perform the idle mode task (that is, enables the AS-side function), and continuously searches for a TN neighboring cell. Optionally, the terminal device further starts a timer 1 (duration of the timer 1 is T1). If the terminal device moves to a point B after the search duration T1, and the terminal device still does not find a TN neighboring cell during running of the timer 1, the terminal device stops performing the idle mode task (that is, disables the AS-side function) again, and stores the point B as a new reference geographical location (that is, a reference location 2). Optionally, if the terminal device does not obtain a new distance threshold, the terminal device may further start to perform the idle mode task (that is, enable the AS-side function) again because a distance between a location of the terminal device after movement and the reference location 2 reaches the distance threshold 1. This cycle is repeated, and details are not described.

In this embodiment, the NTN access network device can indicate, through the TN neighboring cell indication information, that there is a TN cell near the NTN cell, to trigger the terminal device to search for a TN neighboring cell when the terminal device is not within the coverage area of the NTN cell or is at the edge of the coverage area of the NTN cell, thereby avoiding a case in which the terminal device directly stops performing an idle mode task (that is, directly turning off an AS-side function) when the terminal device is not within the coverage area of the NTN cell. Therefore, this helps increase a probability that the terminal device camps on a TN in an NTN discontinuous coverage scenario, thereby helping improve communication experience.

Further, the NTN access network device can further provide specified search duration (that is, the duration indicated by the search time indication information) for the terminal device, to limit a time consumed by the terminal device in searching for a TN neighboring cell. In this way, the terminal device can be prevented from continuously searching when the terminal device does not find a TN neighboring cell on which the terminal device can camp. Therefore, this helps reduce energy consumption of the terminal device.

In addition, the NTN access network device can further provide the distance threshold for the terminal device, and the terminal device, when stopping performing the idle mode task, can store the current geographical location of the terminal device as the reference geographical location, so that the terminal device can start performing the idle mode task again when the distance between the terminal device and the reference geographical location reaches the distance threshold. This helps prevent the terminal device from missing the TN neighboring cell due to continuous stopping of the idle mode task, and helps increase a probability that the terminal device camps on the TN neighboring cell, thereby ensuring communication of the terminal device.

Another embodiment of a cell search method provided in this application is further described below with reference to FIG. 5. In this embodiment, a terminal device can search for a TN cell in a specified search area. For example, first information may indicate the specified search area. Specifically, an NTN access network device and the terminal device perform the following steps.

Step 501: The NTN access network device broadcasts service information of a satellite and coverage information of an NTN cell of the satellite, and correspondingly, the terminal device receives the service information of the satellite and the coverage information of the NTN cell of the satellite.

Step 501 is similar to step 201. For details, refer to the related descriptions in step 201. Details are not described herein again.

In this embodiment, the first information includes geographical area information corresponding to a TN neighboring cell. Optionally, the first information further includes TN neighboring cell information. Specifically, the terminal device may obtain, in a manner described in the following step 502 and step 503, the geographical area information corresponding to the TN neighboring cell and the TN neighboring cell information.

Step 502: The NTN access network device broadcasts geographical area information corresponding to a TN neighboring cell, and correspondingly, the terminal device receives the geographical area information corresponding to the TN neighboring cell.

The geographical area information corresponding to the TN neighboring cell indicates a geographical area in which there is at least one TN neighboring cell. For example, the geographical area information corresponding to the TN neighboring cell may be latitude and longitude, an administrative region, a national area, or the like. The geographical area may be represented by geographical location information such as latitude and longitude, an administrative area, or a national area.

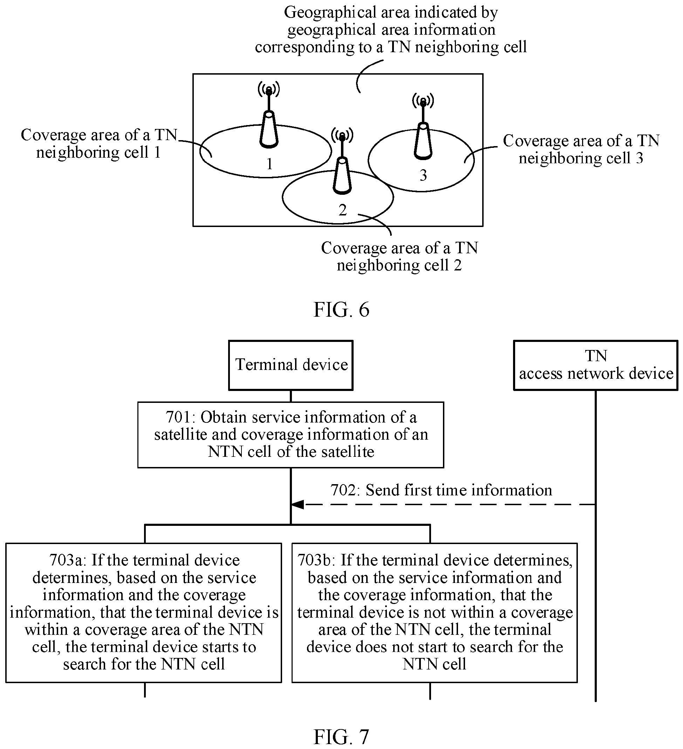

It should be noted that, there is at least one TN neighboring cell in the geographical area, but this does not mean that there is TN neighboring cell coverage (TN coverage for short) at any location in the geographical area. That is, beam coverage areas of all TN neighboring cells in the geographical area may not cover the geographical area completely. A range of a geographical area indicated by the geographical area information corresponding to the TN neighboring cell is greater than or equal to a union set of coverage areas of at least one TN neighboring cell. For ease of understanding, using FIG. 6 as an example, an entire rectangular box represents a geographical area indicated by the geographical area information corresponding to the TN neighboring cell, non-shaded areas represent coverage areas of three TN neighboring cells in the geographical area (that is, a coverage area of a TN neighboring cell 1, a coverage area of a TN neighboring cell 2, and a coverage area of a TN neighboring cell 3), and a shaded area represents an area without TN coverage in the geographical area. A union set (that is, the non-shaded areas) of the coverage area of the TN neighboring cell 1, the coverage area of the TN neighboring cell 2, and the coverage area of the TN neighboring cell 3 is smaller than the geographical area (that is, an area included in the entire rectangle) indicated by the geographical area information corresponding to the TN neighboring cell. The area (that is, the shaded area) without TN coverage in the geographical area is smaller than the geographical area (that is, the area included in the entire rectangle) indicated by the geographical area information corresponding to the TN neighboring cell.

It should be understood that, in the foregoing example, a rectangle is used only as an example to represent the geographical area indicated by the geographical area information corresponding to the TN neighboring cell, and it does not represent that the geographical area indicated by the geographical area information corresponding to the TN neighboring cell is only a rectangle. The geographical area indicated by the geographical area information corresponding to the TN neighboring cell may alternatively be any shape such as a circle, an ellipse, or an irregular shape. The shape of the geographical area indicated by the geographical area information corresponding to the TN neighboring cell is not limited in this application.

After the terminal device receives the geographical area information corresponding to the TN neighboring cell, if the terminal device determines, based on the service information and the coverage information, that the terminal device is not within a coverage area of the NTN cell or is at an edge of the coverage area of the NTN cell, the terminal device searches for the TN neighboring cell based on the geographical area information corresponding to the TN neighboring cell. For details, refer to related descriptions in step 505 below.

Step 503: The NTN access network device broadcasts TN neighboring cell information, and correspondingly, the terminal device receives the TN neighboring cell information.

Step 503 is an optional step.

The TN neighboring cell information indicates a TN neighboring cell in a geographical area indicated by the foregoing geographical area information corresponding to the TN neighboring cell. The TN neighboring cell information includes frequency information of at least one TN neighboring cell and/or cell identifier information of the at least one TN neighboring cell.

In a possible implementation, the TN neighboring cell information includes frequency information of at least one TN neighboring cell. The terminal device searches for the TN neighboring cell in frequencies indicated by the TN neighboring cell information.

In another possible implementation, the TN neighboring cell information includes cell identifier information of at least one TN neighboring cell. Cell identifier information of each TN neighboring cell corresponds to one frequency. The terminal device can determine, based on a correspondence between cell identifier information and a frequency, the frequency of the TN neighboring cell that is indicated by the cell identifier information, and then can determine at least one frequency based on the TN neighboring cell information. Optionally, the cell identifier information may be a physical cell identifier (physical cell identifier, PCI).

Optionally, the correspondence that is between cell identification information and a frequency and that is obtained by the terminal device may be stored when the terminal device last accesses a TN neighboring cell. To be specific, when the terminal device accesses a TN cell at a historical moment, the terminal device stores a cell identifier and a cell frequency of the TN cell. In addition, the terminal device may alternatively obtain the correspondence between cell identification information and a frequency from another device or through an external interface. This is not limited herein.

In another possible implementation, the TN neighboring cell information includes frequency information of at least one TN neighboring cell and cell identifier information of the at least one TN neighboring cell.

In this step, because the NTN access network device can provide the TN neighboring cell information for the terminal device to indicate a frequency, correspondingly, the terminal device can determine, based on the TN neighboring cell information, a frequency near a geographical area in which the terminal device is located. In this way, the terminal device can search for the TN neighboring cell based on the foregoing frequency instead of blindly searching for the TN neighboring cell. Therefore, this helps narrow a frequency range for searching and improve searching efficiency.

In this embodiment, when the NTN access network device performs step 503, there is no chronological order for performing step 503 and step 502. The NTN access network device may first perform step 502 and then perform step 503, or may first perform step 503 and then perform step 502, or may perform step 502 and step 503 at the same time. In addition, when the NTN access network device performs step 502 and step 503 at the same time, the NTN access network device may separately send the geographical area information corresponding to the TN neighboring cell and the TN neighboring cell information through different messages, or may send the geographical area information corresponding to the TN neighboring cell and the information of the TN neighboring cell through a same message. This is not specifically limited herein.

Step 504: The NTN access network device broadcasts first indication information, and correspondingly, the terminal device receives the first indication information.

Step 504 is an optional step. Step 504 is similar to step 203. For details, refer to the related descriptions in step 203. Details are not described herein again.

Step 505: When the terminal device determines, based on the service information and the coverage information, that the terminal device is not within a coverage area of the NTN cell or is at an edge of the coverage area of the NTN cell, the terminal device searches for the TN neighboring cell in a geographical area indicated by the geographical area information corresponding to the TN neighboring cell.

In this embodiment, after the terminal device receives the service information of the satellite and the coverage information of the NTN cell of the satellite, the terminal device may determine a ground coverage status of the NTN cell of the NTN access network device based on the service information of the satellite and the coverage information of the NTN cell of the satellite. With reference to the geographical location of the terminal device, the terminal device can determine whether the terminal device is within the coverage area of the NTN cell of the NTN access network device, or whether the terminal device is at the edge of the coverage area of the NTN cell. For descriptions of how the terminal device determines that the terminal device is not within the coverage area of the NTN cell or is at the edge of the coverage area of the NTN cell, refer to the related descriptions in step 204 above. Details are not described herein again.

When the terminal device determines that the terminal device is not within the coverage area of the NTN cell or is at the edge of the coverage area of the NTN cell, the terminal device further determines whether the terminal device is located in the geographical area indicated by the geographical area information corresponding to the TN neighboring cell. If the current geographical location of the terminal device belongs to the geographical area indicated by the geographical area information of the TN neighboring cell, the terminal device searches for the TN neighboring cell based on the TN neighboring cell information. For details, refer to related descriptions in step 506a. If the current geographical location of the terminal device does not belong to the geographical area indicated by the geographical area information of the TN neighboring cell, the terminal device stops performing an idle mode task. For details, refer to related descriptions in step 506b.

Step 506a: When a current geographical location of the terminal device belongs to the geographical area indicated by the geographical area information of the TN neighboring cell, the terminal device searches for at least one TN neighboring cell indicated by the TN neighboring cell information.

For the descriptions of the TN neighboring cell information, refer to step 503. Details are not described herein again.

In this step, although the terminal device can determine that the current geographical location belongs to the geographical area indicated by the geographical area information of the TN neighboring cell, the terminal device cannot determine whether the terminal device is within a coverage area of a TN neighboring cell and whether a TN neighboring cell on which the terminal device can camp can be found. Because the terminal device can determine, based on the TN neighboring cell information, a frequency of at least one TN neighboring cell, the terminal device may search for the TN neighboring cell in the foregoing frequency, that is, perform operations such as signal measurement and evaluation in the frequency of the at least one TN neighboring cell, to determine a TN neighboring cell suitable for camping on by the terminal device.

It should be understood that, based on the frequency of the at least one TN neighboring cell, the terminal device may find a TN neighboring cell on which the terminal device can camp, or may find no TN neighboring cell on which the terminal device can camp. If the terminal device finds, in the frequency of the at least one TN neighboring cell, a TN neighboring cell on which the terminal device can camp, the terminal device attempts to camp on the TN neighboring cell, and may access the TN neighboring cell. If the terminal device does not find, in the frequency of the at least one TN neighboring cell, a TN neighboring cell on which the terminal device can camp, the terminal device stops performing the idle mode task. Optionally, if the terminal device can move, after stopping performing the idle mode task, the terminal device may further perform step 507.

Step 506b: When a current geographical location of the terminal device does not belong to the geographical area indicated by the geographical area information of the TN neighboring cell, the terminal device stops performing an idle mode task.

For descriptions of stopping performing an idle mode task, refer to the related descriptions in step 204 above. Details are not described herein again.

Optionally, if the terminal device can move, the terminal device may further perform step 507 after performing step 506b.

Step 507: When the current geographical location of the terminal device belongs to the geographical area indicated by the geographical area information of the TN neighboring cell, the terminal device is triggered to start to perform the idle mode task.

Step 507 is an optional step.

Specifically, after the terminal device stops performing the idle mode task, the terminal device may move to the geographical area indicated by the geographical area information of the TN neighboring cell. After the terminal device detects that the terminal device moves to the geographical area indicated by the geographical area information of the TN neighboring cell, the terminal device is triggered to start to perform the idle mode task.

That the terminal device performs an idle mode task (that is, the terminal device performs an idle-mode task, or enables an AS-side function) may be specifically represented as that the terminal device starts to perform a cell search. Optionally, the terminal device may start to search for a TN neighboring cell, or may start to search for an NTN neighboring cell. For example, if the terminal device may further determine, based on the service information and the coverage information, whether the terminal device is within a coverage area of the NTN cell, or determine whether the terminal device is at an edge of the coverage area of the NTN cell, if the terminal device is not within the coverage area of the NTN cell or is at the edge of the coverage area of the NTN cell, the terminal device starts to search for a TN neighboring cell. Alternatively, if the terminal device is within the coverage area of the NTN cell, the terminal device starts to search for a neighboring NTN cell.

In addition, step 502 and step 503 in this embodiment may be replaced with the following content: The NTN access network device may broadcast TN neighboring cell information based on areas, that is, the NTN access network device broadcasts different TN neighboring cell information in different geographical areas. Terminal devices in different geographical areas receive different TN neighboring cell information. If a terminal device receives the TN neighboring cell information, and the terminal device is not within the coverage area of the NTN cell or is at the edge of the coverage area of the NTN cell, the terminal device searches for a TN neighboring cell based on a neighboring cell indicated by the TN neighboring cell information.

In this embodiment, the NTN access network device can provide, for the terminal device, the geographical area information corresponding to the TN neighboring cell, to indicate, to the terminal device, geographical areas in which there are TN neighboring cells. If the terminal device determines, based on the geographical area information corresponding to the TN neighboring cell, that the terminal device is in the geographical area indicated by the geographical area information corresponding to the TN neighboring cell, when the terminal device is not within the coverage area of the NTN cell, the terminal device may not need to directly stop performing the idle mode task (that is, may not need to directly disable the AS-side function). Therefore, this helps increase a probability that the terminal device finds a TN in an NTN discontinuous coverage scenario, thereby helping improve communication experience.

In addition, the terminal device can further start to perform the idle mode task (that is, enable the AS-side function) after moving to the geographical area corresponding to the geographical area information corresponding to the TN neighboring cell. This helps prevent the terminal device from missing the TN neighboring cell due to continuous stopping of the idle mode task, and helps increase a probability that the terminal device camps on the TN neighboring cell, thereby ensuring communication of the terminal device.

In addition, the NTN access network device can further provide a search frequency (that is, a frequency of at least one TN neighboring cell that is determined based on the TN neighboring cell information) for the terminal device, to limit a quantity of frequencies measured when the terminal device searches for the TN neighboring cell. This helps narrow a search frequency range, thereby improving searching efficiency.

It should be noted that after the terminal device camps on the TN neighboring cell (for example, after the terminal device finds the TN neighboring cell by using the solution described in any one of the foregoing embodiments and camps on the TN neighboring cell), the terminal device may need to be reconnected to the NTN. However, a current standard does not provide a solution of how the terminal device returns to the NTN from the TN.

In this case, this application further provides a cell search method, used by a terminal device in a TN to search for an NTN cell and then return to an NTN from the TN.

A main procedure of another cell search method provided in this application is described below with reference to FIG. 7. Specifically, a TN access network device and a terminal device perform the following steps.

Step 701: The terminal device obtains service information of a satellite and coverage information of an NTN cell of the satellite.

The terminal device is located in a TN cell. Optionally, the terminal device camps on the TN cell, and the terminal device is in an idle mode. The terminal device may receive a system broadcast message of the TN cell.

In addition, for explanations of the service information of the satellite and the coverage information of the NTN cell of the satellite, refer to the related descriptions in step 201 above. Details are not described herein again.

Specifically, the terminal device may obtain the service information and the coverage information of the NTN cell through any one of the following implementations.

In a possible implementation, the terminal device stores the received service information of the satellite and the received coverage information of the NTN cell when camping on the NTN cell. For example, the terminal device camps on the NTN cell at a historical moment, and can receive the service information of the satellite and the coverage information of the NTN cell that are broadcast by an NTN access network device. In this way, the terminal device can store the received service information of the satellite and the received coverage information of the NTN cell, so that when the terminal device needs to search for an NTN cell again, it can be determined whether the terminal device is currently within a coverage area of the NTN cell.

In another possible implementation, the terminal device receives the service information of the satellite and the coverage information of the NTN cell from the TN cell. For example, a TN access network device broadcasts the service information of the satellite and the coverage information of the NTN cell. Correspondingly, the terminal device receives the service information of the satellite and the coverage information of the NTN cell. The service information of the satellite and the coverage information of the NTN cell that are broadcast by the TN access network device to the terminal device may be configured by operation and maintenance personnel for the TN access network device, or may be sent by an NTN access network device to the TN access network device through an interface (for example, an Xn interface) between the access network devices, or may be obtained by the TN access network device from a terrestrial gateway or a core network device. This is not specifically limited herein.

In this embodiment, after the terminal device camping on the TN receives the service information of the satellite and the coverage information of the NTN cell of the satellite, the terminal device may determine, based on the service information of the satellite and the coverage information of the NTN cell of the satellite, whether the terminal device is within a coverage area of the NTN cell of the NTN access network device, or whether the terminal device moves to an edge of the coverage area of the NTN cell. When the terminal device determines, based on the service information and the coverage information, that the terminal device is within the coverage area of the NTN cell, the terminal device performs step 703a. Alternatively, when the terminal device determines, based on the service information and the coverage information, that the terminal device is not within the coverage area of the NTN cell or is located at the edge of the coverage area of the NTN cell, the terminal device performs step 703b. Optionally, step 703a and step 703b need to be performed only by terminal devices that previously camp on the TN cell due to discontinuous coverage of an NTN network. These terminal devices record that the terminal devices camp on the TN cell due to the discontinuous coverage of the NTN network.

Step 702: The TN access network device sends first time information, and correspondingly, the terminal device receives the first time information.

Step 702 is an optional step. When the TN access network device performs step 702, there is no chronological order for performing step 701 and step 702 by the TN access network device. In other words, the TN access network device may first perform step 701 and then step 702, or may first perform step 702 and then step 701, or may perform step 701 and step 702 at the same time. In addition, when the TN access network device performs step 701 and step 702 at the same time, the TN access network device may separately send the service information, the coverage information of the NTN cell, and the first time information through different messages, or may send the service information, the coverage information of the NTN cell, and the first time information through a same message. This is not specifically limited herein.

Optionally, the TN access network device broadcasts the first time information. Correspondingly, the terminal device obtains the first time information from a system broadcast message broadcast by the TN access network device.

Optionally, the terminal device that receives the first time information may be a terminal device that previously camps on the TN cell due to discontinuous coverage of an NTN network. For example, the first time information needs to be received only by a terminal device that camps on the TN cell due to the discontinuous coverage of the NTN network.

The first time information is used by the terminal device to determine a moment for starting to search for the NTN cell, or is used by the terminal device to determine a moment for reselecting to the NTN cell.

Optionally, the TN access network device sends different first time information to different terminal devices (for example, terminal devices in different TN cells), or different TN access network devices send different first time information. Therefore, the different terminal devices start to search for the NTN cell at different moments, or the different terminal devices reselect to the NTN cell at different moments. In other words, the first time information has a function of staggering moments at which different terminal devices start to search for an NTN cell. Alternatively, the first time information has a function of staggering moments at which different terminal devices reselect to an NTN cell.

Specifically, there may be a plurality of implementations for the first time information, which are described below separately.

In a possible implementation, the first time information includes a first moment and first duration. The moment for starting to search for the NTN cell or the moment for reselecting to the NTN cell is equal to the first moment plus a product of an adjustment coefficient and the first duration. The adjustment coefficient is a random number generated by the terminal device.

For example, the terminal device may calculate, by using Formula 1, the moment for starting to search for the NTN cell or the moment for reselecting to the NTN cell:

$$T = M1 + R \times D \text{ (Formula 1)}$$

T represents the moment at which the terminal device starts to search for the NTN cell or the moment at which the terminal device reselects to the NTN cell. M1 represents the first moment configured by the TN access network device. D represents the first duration configured by the TN access network device. R represents the random number generated by the terminal device.

Optionally, different TN cells may use different first moments and/or different first duration, and different terminal devices may use different adjustment coefficients that are random numbers.

In another possible implementation, the first time information includes first duration. The moment for starting to search for the NTN cell or the moment for reselecting to the NTN cell is equal to a moment at which the terminal device predicts that there is NTN coverage plus a product of an adjustment coefficient and the first duration. The adjustment coefficient is a random number generated by the terminal device. Optionally, when the first time information is used by the terminal device to determine a moment for reselecting to an NTN cell, the moment for reselecting to an NTN cell is equal to a product of an adjustment coefficient and the first duration plus a moment at which the terminal device searches for an NTN cell.

For example, the terminal device may calculate, by using Formula 2, the moment for starting to search for the NTN cell or the moment for reselecting to the NTN cell:

$$T = M2 + R \times D \text{ (Formula 2)}$$

T represents the moment at which the terminal device starts to search for the NTN cell or the moment at which the terminal device reselects to the NTN cell. M2 represents a moment at which the terminal device predicts that there is NTN coverage or a moment at which the terminal device searches for the NTN cell. D represents the first duration configured by the TN access network device. R represents the random number generated by the terminal device.

Optionally, different terminal devices may predict at different moments that there is NTN coverage, different TN cells may use different first duration, and different terminal devices may use different adjustment coefficients that are random numbers.

In this step, the TN access network device provides the first time information for the terminal device, so that the terminal device determines, based on the first time information, the moment for starting to search for the NTN cell or the moment for reselecting to the NTN cell. This helps the terminal device accurately start to search for the NTN cell or reselect to the NTN cell at a moment. In addition, the TN access network device may send different first time information to different terminal devices (for example, terminal devices in different TN cells), to enable the different terminal devices to determine different moments for starting to search for the NTN cell, or determine different moments for reselecting to the NTN cell. This helps the terminal devices start to search for the NTN cell at different moments or trigger reselection to the NTN cell, thereby preventing a large quantity of terminal devices from being connected to an NTN network at the same time.

Step 703a: If the terminal device determines, based on the service information and the coverage information, that the terminal device is within a coverage area of the NTN cell, the terminal device starts to search for the NTN cell.

In a possible implementation, the TN access network device does not perform step 702 and performs only step 701. In this solution, when the terminal device camping on the TN determines, based on the received service information of the satellite and the received coverage information of the NTN cell of the satellite, that the terminal device is within the coverage area of the NTN cell, the terminal device immediately starts to search for an NTN cell. For example, the terminal device starts to measure a frequency in which an NTN cell may exist, and determines, based on a measurement result for each frequency, whether there may be an NTN cell on which the terminal device can camp.

In another possible implementation, the TN access network device performs step 701 and step 702. The terminal device may receive the first time information. After the terminal device receives the first time information, the terminal device determines, based on the first time information, a specific moment for starting to search for the NTN cell or a specific moment for reselecting to the NTN cell.

In a possible example, the first time information is used by the terminal device to determine a moment for starting to search for the NTN cell. For descriptions of how the terminal device calculates, based on the first time information, the moment for starting to search for the NTN cell, refer to the related descriptions in step 702 above. Details are not described herein again. In this solution, when the terminal device camping on the TN determines, based on the received service information of the satellite and the received coverage information of the NTN cell of the satellite, that the terminal device is within the coverage area of the NTN cell, the terminal device starts to search for the NTN cell at the moment, determined based on the first time information, for starting to search for the NTN cell, instead of immediately starting to search for the NTN cell.

In this embodiment, because different terminal devices can determine, based on the first time information, different moments for starting to search for an NTN cell, terminal devices located in the TN can start to search for the NTN cell at different moments. Therefore, the terminal devices may reselect to the NTN cell at different moments. This helps prevent a large quantity of terminal devices from being connected to an NTN network at the same time.

In another possible example, the first time information is used by the terminal device to determine a moment for reselecting to an NTN cell. For descriptions of how the terminal device calculates, based on the first time information, the moment for reselecting to an NTN cell, refer to the related descriptions in step 702 above. Details are not described herein again. In this solution, when the terminal device camping on the TN determines, based on the received service information of the satellite and the received coverage information of the NTN cell of the satellite, that the terminal device is within the coverage area of the NTN cell, the terminal device immediately starts to search for an NTN cell. However, when the terminal device finds an NTN cell that meets a reselection evaluation condition and that is suitable for reselection, the terminal device triggers reselection to the NTN cell at the moment, determined based on the first time information, for reselecting to an NTN cell.

In this embodiment, because different terminal devices can determine, based on the first time information, different moments for reselecting to an NTN cell, the terminal devices located in the TN reselect to an NTN cell at different moments even if the terminal devices search for the NTN cell at the same time. This helps prevent a large quantity of terminal devices from being connected to the NTN network at the same time.

Step 703b: If the terminal device determines, based on the service information and the coverage information, that the terminal device is not within a coverage area of the NTN cell, the terminal device does not start to search for the NTN cell.

In this embodiment, the terminal device camping on the TN can obtain the service information of the satellite and the coverage information of the NTN cell of the satellite, and determine, based on the service information and the coverage information of the NTN cell, whether there is NTN coverage (that is, determine whether the terminal device is within the coverage area of the NTN cell). For example, the terminal device determines, based on a current geographical location, the service information of the satellite, and the coverage information of the NTN cell of the satellite, whether the terminal device currently has NTN coverage. In this way, when determining that the terminal device is within the coverage area of the NTN cell, the terminal device starts to search for the NTN cell. Alternatively, when determining that the terminal device is not within the coverage area of the NTN cell, the terminal device does not start to search for the NTN cell. Therefore, this helps the terminal device determine a condition under which a search for an NTN cell can be triggered, so that the terminal device can camp on an NTN again from the TN, thereby facilitating load balancing management.

Further, the TN access network device can provide the first time information for the terminal device, and the terminal device can determine, based on the first time information, a moment for starting to search for the NTN cell or a moment for reselecting to the NTN cell. Therefore, when the terminal device is within the coverage area of the NTN cell, the terminal device can determine when to start to search for the NTN cell or when to reselect to the NTN cell.

Further, when the TN access network device may broadcast different first time information in different TN cells, different terminal devices can generate different random numbers to generate different moments for starting to search for the NTN cell (or different moments for reselecting to the NTN cell). Therefore, this helps different terminal devices stagger moments for starting to search for the NTN cell (or stagger moments for reselecting to the NTN cell), and helps avoid a case of triggering registration update caused by simultaneous connection of a large quantity of terminal devices to an NTN, thereby helping avoid congestion of the NTN network.

It should be noted that in this embodiment, if the TN access network device is an access network device in a CU-DU split architecture, information (for example, the service information, the coverage information of the NTN cell, and the first time information that are described above) sent by the TN access network device to the terminal device may be generated or obtained by a CU and sent to the terminal device through a DU. Optionally, if the CU includes a CU-CP 1, a CU-CP 2, and a CU-UP, the CU-CP 1 generates or obtains the foregoing information (for example, the service information, the coverage information of the NTN cell, and the first time information that are described above), and sends the information to the CU-CP 2. Then, the CU-CP 2 encapsulates, based on a protocol encapsulation function, the information to be sent to the terminal device, and sends encapsulated information to the terminal device through the DU.

Optionally, a process in which the CU sends information (for example, the service information, the coverage information of the NTN cell, and the first time information that are described above) to the terminal device through the DU may be a process in which the DU transparently transmits the information to the terminal device. To be specific, the DU directly sends the information received from the CU to the terminal device without modifying the information. Alternatively, the DU may modify the information received from the CU with reference to information that is related to the information and that can be obtained by the DU, and then the DU sends the modified information to the terminal device. Optionally, when the latter is used for implementation, the DU may send the modified information to the CU, for the CU to align the information with the DU.

For example, a process in which the CU sends the first time information to the terminal device through the DU may be that the CU in the TN access network device generates the first time information, and the DU in the TN access network device directly and transparently transmits the first time information to the terminal device.

For example, a process in which the CU sends the service information and the coverage information of the NTN cell to the terminal device through the DU may be that the CU in the TN access network device generates the service information and the coverage information of the NTN cell. However, the DU stores updated more accurate service information and/or coverage information of the NTN cell. In this case, the DU may send the updated service information and/or the updated coverage information of the NTN cell to the terminal device. Optionally, the DU may feed back the updated service information and/or the updated coverage information of the NTN cell to the CU, for the CU to align the service information and the coverage information of the NTN cell with the DU.

For example, a process in which the CU sends the service information and the coverage information of the NTN cell to the terminal device through the DU may alternatively be that the CU directly and transparently transmits the generated service information and the generated coverage information of the NTN cell to the terminal device through the DU, and the DU is unaware of the service information and the coverage information of the NTN cell.

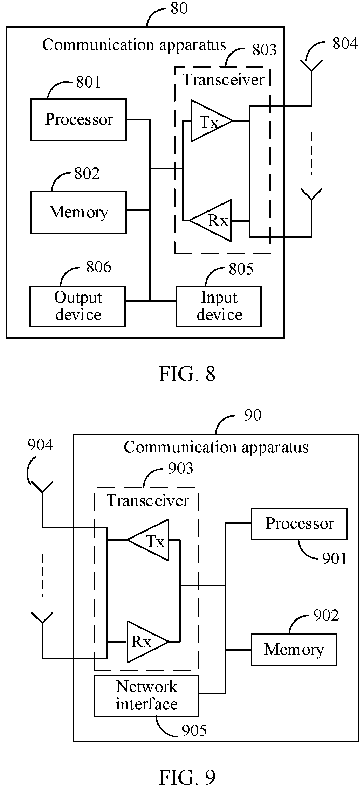

FIG. 8 is a diagram of a structure of a communication apparatus 80 according to an embodiment. It should be understood that the terminal device in the method embodiment corresponding to FIG. 2, FIG. 3, FIG. 5, or FIG. 7 may be based on the structure of the communication apparatus 80 shown in FIG. 8 in this embodiment.

The communication apparatus 80 includes at least one processor 801, at least one memory 802, and at least one transceiver 803. The processor 801, the memory 802, and the transceiver 803 are connected. Optionally, the communication apparatus 80 may further include an input device 805, an output device 806, and one or more antennas 804. The antenna 804 is connected to the transceiver 803, and the input device 805 and the output device 806 are connected to the processor 801.

In this embodiment, the memory 802 is mainly configured to store a software program and data. The memory 802 may exist independently and is connected to the processor 801. Optionally, the memory 802 may be integrated with the processor 801, such as integrated into one or more chips. The memory 802 can store program code for performing the technical solution in this embodiment of this application, and the processor 801 controls execution of the program code. Various types of executed computer program code may also be considered as drivers of the processor 801. It should be understood that FIG. 8 in this embodiment shows only one memory and one processor. However, during actual application, the communication apparatus 80 may include a plurality of processors or a plurality of memories. This is not specifically limited herein. In addition, the memory 802 may also be referred to as a storage medium, a storage device, or the like. The memory 802 may be a storage element on a same chip as the processor, that is, an on-chip storage element, or may be an independent storage element. This is not limited in this embodiment of this application.

In this embodiment, the transceiver 803 may be configured to support receiving or sending of a radio frequency signal between the communication apparatus 80 and an access network device. The transceiver 803 may be connected to the antenna 804. The transceiver 803 includes a transmitter Tx and a receiver Rx. Specifically, the one or more antennas 804 may receive a radio frequency signal. The receiver Rx in the transceiver 803 is configured to: receive the radio frequency signal from the antenna 804, convert the radio frequency signal into a digital baseband signal or a digital intermediate frequency signal, and provide the digital baseband signal or the digital intermediate frequency signal for the processor 801, to enable the processor 801 to perform further processing, for example, demodulation processing and decoding processing, on the digital baseband signal or the digital intermediate frequency signal. In addition, the transmitter Tx in the transceiver 803 is further configured to: receive a modulated digital baseband signal or a modulated digital intermediate frequency signal from the processor 801, convert the modulated digital baseband signal or the modulated digital intermediate frequency signal into a radio frequency signal, and send the radio frequency signal through the one or more antennas 804. Specifically, the receiver Rx may selectively perform one-level or multi-level frequency down-mixing processing and analog-to-digital conversion processing on the radio frequency signal to obtain the digital baseband signal or the digital intermediate frequency signal. A sequence of the frequency down-mixing and the analog-to-digital conversion processing is adjustable. The transmitter Tx may selectively perform one-level or multi-level frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

It should be understood that the transceiver 803 may also be referred to as a transceiver unit, a transceiver machine, a transceiver apparatus, or the like. Optionally, a device configured to implement a receiving function in the transceiver unit may be considered as a receiving unit, and a device configured to implement a sending function in the transceiver unit may be considered as a sending unit. In other words, the transceiver unit includes a receiving unit and a sending unit. The receiving unit may also be referred to as a receiver, an input port, a receiver circuit, or the like. The sending unit may be referred to as a transmitter, an emitter, a transmitter circuit, or the like.

The processor 801 may be a baseband processor, or may be a central processing unit (central processing unit, CPU). The baseband processor and the CPU may be integrated together or separated from each other. The processor 801 may be configured to implement various functions for the terminal device, for example, configured to process a communication protocol and communication data; or configured to: control the entire terminal device, execute a software program, and process data of the software program; or configured to assist in completing a computing processing task, for example, graphics and image processing or audio processing. Alternatively, the processor 801 is configured to implement one or more of the foregoing functions.

In addition, the output device 806 communicates with the processor 801, and may display information in a plurality of manners. This is not specifically limited herein.

In a design, the communication apparatus 80 is configured to perform the method of the terminal device in the embodiment corresponding to FIG. 2, FIG. 3, or FIG. 5. The transceiver 803 in the communication apparatus 80 is configured to: receive service information of a satellite and coverage information of an NTN cell of the satellite and receive first information. The first information indicates the communication apparatus to search for a TN neighboring cell. The processor 801 is configured to determine, based on the service information and the coverage information of the NTN cell, whether the communication apparatus 80 is within a coverage area of the NTN cell or whether the communication apparatus 80 is at an edge of the coverage area of the NTN cell. The processor 801 is further configured to: when determining, based on the service information and the coverage information, that the communication apparatus 80 is not within the coverage area of the NTN cell or is at the edge of the coverage area of the NTN cell, search for the TN neighboring cell based on the first information.

In a possible implementation, the first information includes TN neighboring cell indication information and search time indication information. The TN neighboring cell indication information indicates whether an NTN serving cell has a TN neighboring cell. The search time indication information indicates duration allowed by the communication apparatus 80 for searching for a TN neighboring cell.

In a possible implementation, the processor 801 is specifically configured to: when the TN neighboring cell indication information indicates that the NTN serving cell has a TN neighboring cell, search for a TN neighboring cell within the duration indicated by the search time indication information.

In a possible implementation, the processor 801 is further configured to: when the communication apparatus 80 does not find a TN neighboring cell within the duration indicated by the search time indication information, stop performing an idle mode task.

In a possible implementation, the first information further includes a distance threshold. The processor 801 is further configured to perform the idle mode task when a distance between a current geographical location of the communication apparatus 80 and a reference geographical location reaches the distance threshold. The reference geographical location is a geographical location of the communication apparatus 80 when the communication apparatus 80 is triggered to perform a TN cell search due to discontinuous coverage of the NTN cell last time, or a geographical location of the communication apparatus 80 when the communication apparatus 80 is triggered to stop performing the idle mode task last time.

In a possible implementation, the first information includes geographical area information corresponding to the TN neighboring cell.

In a possible implementation, the processor 801 is specifically configured to search for the TN neighboring cell in a geographical area indicated by the geographical area information corresponding to the TN neighboring cell.

In a possible implementation, the processor 801 is further configured to: when a current geographical location of the communication apparatus 80 does not belong to the geographical area indicated by the geographical area information of the TN neighboring cell, stop performing an idle mode task.

In a possible implementation, the processor 801 is further configured to: when the current geographical location of the communication apparatus 80 belongs to the geographical area indicated by the geographical area information of the TN neighboring cell, trigger execution of the idle mode task.

In a possible implementation, the first information further includes TN neighboring cell information. The TN neighboring cell information includes frequency information of at least one TN neighboring cell and/or cell identifier information of the at least one TN neighboring cell.

The processor 801 is further configured to: when the current geographical location of the communication apparatus 80 belongs to the geographical area indicated by the geographical area information of the TN neighboring cell, search for the at least one TN neighboring cell indicated by the TN neighboring cell information.

In a possible implementation, the processor 801 is further configured to receive, by the communication apparatus 80, first indication information. The first indication information indicates to trigger a search for the TN neighboring cell based on the first information when the terminal device is not within the coverage area of the NTN cell.

In another design, the communication apparatus 80 is configured to perform the method of the terminal device in the embodiment corresponding to FIG. 7. The transceiver 803 in the communication apparatus 80 is configured to obtain service information of a satellite and coverage information of an NTN cell of the satellite. The processor 801 is configured to start to search for an NTN cell when determining, based on the service information and the coverage information, that the communication apparatus 80 is within a coverage area of the NTN cell.

In a possible implementation, the transceiver 803 is further configured to receive first time information. The first time information is used by the communication apparatus 80 to determine a moment for starting to search for the NTN cell, or is used by the communication apparatus 80 to determine a moment for reselecting to the NTN cell.

In a possible implementation, the first time information includes a first moment and first duration. The processor 801 is specifically configured to determine, based on the following formula, the moment for starting to search for the NTN cell or the moment for reselecting to the NTN cell: $T = M1 + R \times D$. T is the moment for starting to search for the NTN cell or the moment for reselecting to the NTN cell. M1 is the first moment of a TN. D is the first duration. R is a random number generated by the communication apparatus 80.

In a possible implementation, the first time information includes first duration. The processor 801 is specifically configured to determine, based on the following formula, the moment for starting to search for the NTN cell or the moment for reselecting to the NTN cell: $T = M2 + R \times D$. T is the moment for starting to search for the NTN cell or the moment for reselecting to the NTN cell. M2 is a moment at which the terminal device predicts that there is NTN coverage. D is the first duration. R is a random number generated by the communication apparatus 80.

In a possible implementation, the processor 801 is configured to: when the communication apparatus 80 camps on the NTN cell, store the received service information of the satellite and the received coverage information of the NTN cell.

In a possible implementation, the transceiver 803 is configured to receive the service information of the satellite and the coverage information of the NTN cell from the TN cell.

It should be noted that, for specific implementations and beneficial effects of this embodiment, refer to the method of the terminal device in the foregoing embodiment. Details are not described herein again.

FIG. 9 is a schematic of a structure of another communication apparatus 90 according to an embodiment. It should be understood that the access network device in the method embodiment corresponding to FIG. 2, FIG. 3, FIG. 5, or FIG. 7 may be based on the structure of the communication apparatus 90 shown in FIG. 9 in this embodiment, for example, the NTN access network device in the method embodiment corresponding to FIG. 2, FIG. 3, or FIG. 5, or the TN access network device in the method embodiment corresponding to FIG. 7.

The communication apparatus 90 includes at least one processor 901, at least one memory 902, at least one transceiver 903, at least one network interface 905, and one or more antennas 904. The processor 901, the memory 902, the transceiver 903, and the network interface 905 are connected through a connection apparatus, and the antenna 904 is connected to the transceiver 903. The connection apparatus may include various types of interfaces, transmission cables, buses, or the like. This is not limited in this embodiment.

The memory 902 is mainly configured to store a software program and data. The memory 902 may exist independently and is connected to the processor 901. Optionally, the memory 902 may be integrated with the processor 901, such as integrated into one or more chips. The memory 902 can store program code for performing the technical solution in this embodiment of this application, and the processor 901 controls execution of the program code. Various types of executed computer program code may also be considered as drivers of the processor 901. It should be understood that FIG. 9 in this embodiment shows only one memory and one processor. However, during actual application, the communication apparatus 90 may include a plurality of processors or a plurality of memories. This is not specifically limited herein. In addition, the memory 902 may also be referred to as a storage medium, a storage device, or the like. The memory 902 may be a storage element on a same chip as the processor, that is, an on-chip storage element, or may be an independent storage element. This is not limited in this embodiment of this application.

In this embodiment, the transceiver 903 may be configured to support receiving or sending of a radio frequency signal between the communication apparatus 90 and a terminal device. The transceiver 903 may be connected to the antenna 904. The transceiver 903 includes a transmitter Tx and a receiver Rx. Specifically, the one or more antennas 904 may receive a radio frequency signal. The receiver Rx in the transceiver 903 is configured to: receive the radio frequency signal from the antenna 904, convert the radio frequency signal into a digital baseband signal or a digital intermediate frequency signal, and provide the digital baseband signal or the digital intermediate frequency signal for the processor 901, to enable the processor 901 to perform further processing, for example, demodulation processing and decoding processing, on the digital baseband signal or the digital intermediate frequency signal. In addition, the transmitter Tx in the transceiver 903 is further configured to: receive a modulated digital baseband signal or a modulated digital intermediate frequency signal from the processor 901, convert the modulated digital baseband signal or the modulated digital intermediate frequency signal into a radio frequency signal, and send the radio frequency signal through the one or more antennas 904. Specifically, the receiver Rx may selectively perform one-level or multi-level frequency down-mixing processing and analog-to-digital conversion processing on the radio frequency signal to obtain the digital baseband signal or the digital intermediate frequency signal. A sequence of the frequency down-mixing and the analog-to-digital conversion processing is adjustable. The transmitter Tx may selectively perform one-level or multi-level frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

It should be understood that the transceiver 903 may also be referred to as a transceiver unit, a transceiver machine, a transceiver apparatus, or the like. Optionally, a device configured to implement a receiving function in the transceiver unit may be considered as a receiving unit, and a device configured to implement a sending function in the transceiver unit may be considered as a sending unit. In other words, the transceiver unit includes a receiving unit and a sending unit. The receiving unit may also be referred to as a receiver, an input port, a receiver circuit, or the like. The sending unit may be referred to as a transmitter, an emitter, a transmitter circuit, or the like.

In addition, the processor 901 is mainly configured to process a communication protocol and communication data, control the entire network device, execute a software program, and process data of the software program, for example, configured to support the communication apparatus 90 in performing an action described in the foregoing embodiment. The communication apparatus 90 may include a baseband processor and a central processing unit. The baseband processor is mainly configured to process a communication protocol and communication data. The central processing unit is mainly configured to control the entire communication apparatus 90, execute a software program, and process data of the software program. Functions of the baseband processor and the central processing unit may be integrated into the processor 901 in FIG. 9. A person skilled in the art may understand that the baseband processor and the central processing unit may alternatively be processors independent of each other and are interconnected by using a technology such as a bus. A person skilled in the art may understand that the communication apparatus 90 may include a plurality of baseband processors to adapt to different network standards, the communication apparatus 90 may include a plurality of central processing units to enhance a processing capability thereof, and components in the communication apparatus 90 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In addition, the network interface 905 is configured to enable the communication apparatus 90 to be connected to another communication apparatus through a communication link. Specifically, the network interface 905 may include a network interface between the communication apparatus 90 and a core network element, for example, an S1 interface. Alternatively, the network interface 905 may include a network interface between the communication apparatus 90 and another network device (for example, another access network device or another core network element), for example, an X2 interface or an Xn interface.

In a design, the communication apparatus 90 is configured to perform the method of the NTN access network device in the embodiment corresponding to FIG. 2, FIG. 3, or FIG. 5. The transceiver 903 in the communication apparatus 90 is configured to send service information of a satellite and coverage information of an NTN cell of the satellite. The processor 901 is configured to generate first information. The transceiver 903 is further configured to send the first information. The first information indicates a terminal device to search for a TN neighboring cell.

In a possible implementation, the first information includes TN neighboring cell indication information and search time indication information. The TN neighboring cell indication information indicates whether an NTN serving cell has a TN neighboring cell. The search time indication information indicates duration allowed by the terminal device for searching for the TN neighboring cell.

In a possible implementation, the first information further includes a distance threshold. The distance threshold is used to indicate to trigger execution of an idle mode task when a distance between a current geographical location of the terminal device and a reference geographical location reaches the distance threshold. The reference geographical location is a geographical location of the terminal device when the terminal device is triggered to perform a TN cell search due to discontinuous coverage of the NTN cell last time, or a geographical location of the terminal device when the terminal device is triggered to stop performing the idle mode task last time.

In a possible implementation, the first information includes geographical area information corresponding to the TN neighboring cell. The geographical area information corresponding to the TN neighboring cell indicates a geographical area in which there is at least one TN neighboring cell.

In a possible implementation, the first information further includes TN neighboring cell information. The TN neighboring cell information includes frequency information of at least one TN neighboring cell and/or cell identifier information of the at least one TN neighboring cell.

In a possible implementation, the transceiver 903 is specifically configured to send the first information to the terminal device within a preset time range before a service stop time of the NTN serving cell in which the terminal device is located.

In a possible implementation, the processor 901 is further configured to determine, based on the service information of the satellite and the coverage information of the NTN cell of the satellite, that the terminal device is not within a coverage area of the NTN cell or is at an edge of the coverage area of the NTN cell.

In a possible implementation, the transceiver 903 is further configured to send first indication information to the terminal device. The first indication information indicates to trigger a search for the TN neighboring cell based on the first information when the terminal device is not within the coverage area of the NTN cell or is at the edge of the coverage area of the NTN cell.

In another design, the communication apparatus 90 is configured to perform the method of the TN access network device in the embodiment corresponding to FIG. 7. The transceiver 903 in the communication apparatus 90 is configured to send service information of a satellite and coverage information of an NTN cell of the satellite to a terminal device in a TN cell. The service information and the coverage information are used by the terminal device to start to search for an NTN cell when the terminal device determines, based on the service information and the coverage information, that the terminal device is within a coverage area of the NTN cell.

In a possible implementation, the transceiver 903 is further configured to send first time information. The first time information is used by the terminal device to determine a moment for starting to search for the NTN cell, or is used by the terminal device to determine a moment for reselecting to the NTN cell.

Optionally, the first time information includes a first moment and first duration. Optionally, the moment for starting to search for the NTN cell or the moment for reselecting to the NTN cell is equal to the first moment plus a product of an adjustment coefficient and the first duration. The adjustment coefficient is a random number generated by the terminal device.

Optionally, the first time information includes first duration. Optionally, the moment for starting to search for the NTN cell or the moment for reselecting to the NTN cell is equal to a moment at which the terminal device predicts that there is NTN coverage plus a product of an adjustment coefficient and the first duration. The adjustment coefficient is a random number generated by the terminal device.

It should be noted that for specific implementations and beneficial effects of this embodiment, refer to the method of the access network device in the foregoing embodiment. Details are not described herein again.

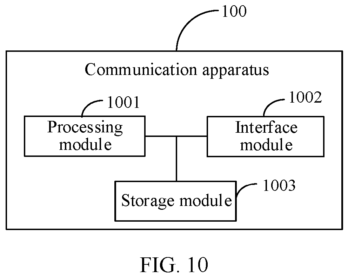

As shown in FIG. 10, this application further provides a communication apparatus 100. The communication apparatus 100 may be a terminal device or an access network device, or may be a component (for example, an integrated circuit or a chip) of the terminal device or the access network device. Alternatively, the communication apparatus 100 may be another communication module configured to implement the method in the method embodiment of this application.

The communication apparatus 100 may include a processing module 1001 (or referred to as a processing unit), and optionally, may further include an interface module 1002 (or referred to as a transceiver unit or a transceiver module) and a storage module 1003 (or referred to as a storage unit). The interface module 1002 is configured to implement communication with another device. The interface module 1002 may be, for example, a transceiver module or an input/output module.

In a possible design, one or more modules in FIG. 10 may be implemented by one or more processors, or may be implemented by one or more processors and memories, or may be implemented by one or more processors and transceivers, or may be implemented by one or more processors, memories, and transceivers. This is not limited in this embodiment of this application. The processor, the memory, and the transceiver may be disposed separately or may be integrated.

The communication apparatus 100 has a function of implementing the terminal device described in embodiments of this application. For example, the communication apparatus 100 includes a module, a unit, or a means (means) corresponding to a terminal device performing the steps related to the terminal device described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiment.

Alternatively, the communication apparatus 100 has a function of implementing the access network device described in embodiments of this application. For example, the communication apparatus 100 includes a module, a unit, or a means (means) corresponding to an access network device performing the steps related to the access network device described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiment.

Optionally, the modules in the communication apparatus 100 in this embodiment of this application may be configured to perform the method of the terminal device in the embodiment corresponding to FIG. 2, FIG. 3, or FIG. 5 in embodiments of this application. For example, the interface module 1002 in the communication apparatus 100 is configured to receive service information of a satellite and coverage information of an NTN cell of the satellite, and receive first information. The first information indicates the terminal device to search for a TN neighboring cell. The processing module 1001 is configured to determine, based on the service information and the coverage information of the NTN cell, whether the terminal device is within a coverage area of the NTN cell or whether the terminal device is at an edge of the coverage area of the NTN cell. The processing module 1001 is further configured to: when determining, based on the service information and the coverage information, that the terminal device is not within the coverage area of the NTN cell or is at the edge of the coverage area of the NTN cell, search for the TN neighboring cell based on the first information.

Optionally, the modules in the communication apparatus 100 in this embodiment of this application may be configured to perform the method of the terminal device in the embodiment corresponding to FIG. 7 in embodiments of this application. For example, the interface module 1002 in the communication apparatus 100 is configured to obtain service information of a satellite and coverage information of an NTN cell of the satellite. The processing module 1001 is configured to: when determining, based on the service information and the coverage information, that the communication apparatus 100 is within a coverage area of the NTN cell, start to search for an NTN cell.

It should be noted that for another implementation of this embodiment, refer to the communication apparatus 80 in the embodiment corresponding to FIG. 8 above. Details are not described herein again.

Optionally, the modules in the communication apparatus 100 in this embodiment of this application may be configured to perform the method of the NTN access network device in the embodiment corresponding to FIG. 2, FIG. 3, or FIG. 5 in embodiments of this application. For example, the interface module 1002 in the communication apparatus 100 is configured to send service information of a satellite and coverage information of an NTN cell of the satellite. The processing module 1001 is configured to generate first information. The interface module 1002 is further configured to send the first information. The first information indicates the terminal device to search for a TN neighboring cell.

Optionally, the modules in the communication apparatus 100 in this embodiment of this application may be configured to perform the method of the TN access network device in the embodiment corresponding to FIG. 7 in embodiments of this application. The interface module 1002 in the communication apparatus 100 is configured to send service information of a satellite and coverage information of an NTN cell of the satellite to a terminal device in a TN cell. The service information and the coverage information are used by the terminal device to start to search for an NTN cell when the terminal device determines, based on the service information and the coverage information, that the terminal device is within a coverage area of the NTN cell.

It should be noted that for another implementation of this embodiment, refer to the communication apparatus 90 in the embodiment corresponding to FIG. 9 above. Details are not described herein again.

In addition, this application provides a computer program product. The computer program product includes one or more computer instructions. When the computer program instructions are loaded and executed on a computer, all or some of the procedures or functions according to embodiments of this application are generated. For example, the method related to the terminal device in FIG. 2, FIG. 3, FIG. 5, or FIG. 7 above is implemented. For another example, the method related to the NTN access network device in FIG. 2, FIG. 3, or FIG. 5 above is implemented. For another example, the method related to the TN access network device in FIG. 7 above is implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the terminal device in FIG. 2, FIG. 3, FIG. 5, or FIG. 7 above.

In addition, this application further provides a computer-readable storage medium. The storage medium stores a computer program, and the computer program is executed by a processor to implement the method related to the NTN access network device in FIG. 2, FIG. 3, or FIG. 5 above.

In addition, this application further provides a computer-readable storage medium. The storage medium stores a computer program, and the computer program is executed by a processor to implement the method related to the TN access network device in FIG. 7 above.

It should be understood that sequence numbers of the foregoing processes do not mean execution sequences in the various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

**Claims**

1. A cell search method, comprising:

    receiving, by a terminal device, service information of a satellite and coverage information of a non-terrestrial network NTN cell of the satellite;
    receiving, by the terminal device, first information, wherein the first information indicates the terminal device to search for a terrestrial network TN neighboring cell; and
    when the terminal device determines, based on the service information and the coverage information, that the terminal device is not within a coverage area of the NTN cell or is at an edge of the coverage area of the NTN cell, searching for, by the terminal device, the TN neighboring cell based on the first information.

2. The method according to claim 1, wherein the first information comprises TN neighboring cell indication information and search time indication information, the TN neighboring cell indication information indicates whether an NTN serving cell has a TN neighboring cell, and the search time indication information indicates duration allowed by the terminal device for searching for the TN neighboring cell.

3. The method according to claim 2, wherein the searching for, by the terminal device, the TN neighboring cell based on the first information comprises: when the TN neighboring cell indication information indicates that the NTN serving cell has a TN neighboring cell, searching for, by the terminal device, the TN neighboring cell within the duration indicated by the search time indication information.

4. The method according to claim 3, further comprising: when the terminal device does not find the TN neighboring cell within the duration indicated by the search time indication information, stopping, by the terminal device, performing an idle mode task.

5. The method according to claim 4, wherein the first information further comprises a distance threshold; and
    the method further comprises:
    performing, by the terminal device, the idle mode task when a distance between a current geographical location of the terminal device and a reference geographical location reaches the distance threshold, wherein the reference geographical location is a geographical location of the terminal device when the terminal device is triggered to perform a TN cell search due to discontinuous coverage of the NTN cell last time, or a geographical location of the terminal device when the terminal device is triggered to stop performing an idle mode task last time.

6. The method according to claim 1, wherein the first information comprises geographical area information corresponding to the TN neighboring cell.

7. The method according to claim 6, wherein the searching for, by the terminal device, the TN neighboring cell based on the first information comprises: searching for, by the terminal device, the TN neighboring cell in a geographical area indicated by the geographical area information corresponding to the TN neighboring cell.

8. The method according to claim 7, further comprising:
when a current geographical location of the terminal device does not belong to the geographical area indicated by the geographical area information of the TN neighboring cell, stopping, by the terminal device, performing an idle mode task.

9. The method according to claim 8, further comprising:
when the current geographical location of the terminal device belongs to the geographical area indicated by the geographical area information of the TN neighboring cell, triggering, by the terminal device, execution of the idle mode task.

10. The method according to claim 8 or 9, wherein the first information further comprises TN neighboring cell information, and the TN neighboring cell information comprises frequency information of at least one TN neighboring cell and/or cell identifier information of the at least one TN neighboring cell; and the method further comprises:
when the current geographical location of the terminal device belongs to the geographical area indicated by the geographical area information of the TN neighboring cell, searching for, by the terminal device, the at least one TN neighboring cell indicated by the TN neighboring cell information.

11. The method according to any one of claims 1 to 10, wherein before the searching for, by the terminal device, the TN neighboring cell based on the first information, the method further comprises:
receiving, by the terminal device, first indication information, wherein the first indication information indicates to trigger a search for the TN neighboring cell based on the first information when the terminal device is not within the coverage area of the NTN cell.

12. A cell search method, comprising:

sending, by an access network device, service information of a satellite and coverage information of an NTN cell of the satellite; and
sending, by the access network device, first information, wherein the first information indicates a terminal device to search for a TN neighboring cell.

13. The method according to claim 12, wherein the first information comprises TN neighboring cell indication information and search time indication information, the TN neighboring cell indication information indicates whether an NTN serving cell has a TN neighboring cell, and the search time indication information indicates duration allowed by the terminal device for searching for the TN neighboring cell.

14. The method according to claim 13, wherein the first information further comprises a distance threshold, the distance threshold is used to indicate to trigger execution of an idle mode task when a distance between a current geographical location of the terminal device and a reference geographical location reaches the distance threshold, and the reference geographical location is a geographical location of the terminal device when the terminal device is triggered to perform a TN cell search due to discontinuous coverage of the NTN cell last time, or a geographical location of the terminal device when the terminal device is triggered to stop performing the idle mode task.

15. The method according to claim 12, wherein the first information comprises geographical area information corresponding to the TN neighboring cell.

16. The method according to claim 15, wherein the first information further comprises TN neighboring cell information, and the TN neighboring cell information comprises frequency information of at least one TN neighboring cell and/or cell identifier information of the at least one TN neighboring cell.

17. The method according to any one of claims 12 to 16, wherein the sending, by the access network device, first information comprises:
sending, by the access network device, the first information to the terminal device within a preset time range before a service stop time of the NTN serving cell in which the terminal device is located.

18. The method according to any one of claims 12 to 16, wherein before the sending, by the access network device, the first information to the terminal device, the method further comprises:
determining, by the access network device based on the service information of the satellite and the coverage information of the NTN cell of the satellite, that the terminal device is to leave a coverage area of the NTN cell or is at an edge of the coverage area of the NTN cell.

19. The method according to any one of claims 12 to 18, wherein the method further comprises:
sending, by the access network device, first indication information to the terminal device, wherein the first indication information indicates to trigger a search for the TN neighboring cell based on the first information when the terminal device is not within the coverage area of the NTN cell or is at the edge of the coverage area of the NTN cell.

20. The method according to any one of claims 12 to 19, wherein the access network device is an NTN access network device.

**21.** A cell search method, comprising:

    obtaining, by a terminal device, service information of a satellite and coverage information of an NTN cell of the satellite, wherein the terminal device is located in a TN cell; and
    when the terminal device determines, based on the service information and the coverage information, that the terminal device is within a coverage area of the NTN cell, starting, by the terminal device, to search for the NTN cell.

**22.** The method according to claim 21, further comprising:
receiving, by the terminal device, first time information, wherein the first time information is used by the terminal device to determine a moment for starting to search for the NTN cell, or is used by the terminal device to determine a moment for reselecting to the NTN cell.

**23.** The method according to claim 22, wherein the first time information comprises a first moment and first duration.

**24.** The method according to claim 23, wherein that the terminal device determines a moment for starting to search for the NTN cell, or the terminal device determines a moment for reselecting to the NTN cell comprises:
the terminal device determines, based on the following formula, the moment for starting to search for the NTN cell or the moment for reselecting to the NTN cell:

$$T = M1 + R \times D,$$

wherein
T is the moment for starting to search for the NTN cell or the moment for reselecting to the NTN cell; M1 is the first moment of a TN; D is the first duration; and R is a random number generated by the terminal device.

**25.** The method according to claim 22, wherein the first time information comprises first duration.

**26.** The method according to claim 25, wherein that the terminal device determines a moment for starting to search for the NTN cell, or the terminal device determines a moment for reselecting to the NTN cell comprises:
the terminal device determines, based on the following formula, the moment for starting to search for the NTN cell or the moment for reselecting to the NTN cell:
T = M2 + R x D, wherein

T is the moment for starting to search for the NTN cell or the moment for reselecting to the NTN cell; M2 is a moment at which the terminal device predicts that there is NTN coverage; D is the first duration; and R is a random number generated by the terminal device.

**27.** The method according to any one of claims 21 to 26, wherein the obtaining, by a terminal device, service information of a satellite and coverage information of an NTN cell of the satellite comprises:
storing, by the terminal device, the received service information of the satellite and the received coverage information of the NTN cell when camping on the NTN cell.

**28.** The method according to any one of claims 21 to 26, wherein the obtaining, by a terminal device, service information of a satellite and coverage information of an NTN cell of the satellite comprises:
receiving, by the terminal device, the service information of the satellite and the coverage information of the NTN cell from the TN cell.

**29.** A cell search method, comprising:
sending, by a TN access network device, service information of a satellite and coverage information of an NTN cell of the satellite to a terminal device in a TN cell, wherein the service information and the coverage information are used by the terminal device to start to search for the NTN cell when the terminal device determines, based on the service information and the coverage information, that the terminal device is within a coverage area of the NTN cell.

**30.** The method according to claim 29, further comprising:
sending, by the TN access network device, first time information, wherein the first time information is used by the terminal device to determine a moment for starting to search for the NTN cell, or is used by the terminal device to determine a moment for reselecting to the NTN cell.

**31.** The method according to claim 30, wherein the first time information comprises a first moment and first duration.

**32.** The method according to claim 30, wherein the first time information comprises first duration.

**33.** A communication apparatus, comprising a processor and a memory, wherein

    the memory stores a computer program; and
    the processor invokes the computer program to enable the communication apparatus to perform the method according to any one of claims 1 to 11 or the method according to any one of claims 21 to 28.

34. A communication apparatus, comprising a processor and a memory, wherein

the memory stores a computer program; and the processor invokes the computer program to enable the communication apparatus to perform the method according to any one of claims 12 to 20 or the method according to any one of claims 29 to 32.

35. A computer-readable storage medium, storing instructions, wherein when the instructions are run on a computer, the computer is enabled to perform the method according to any one of claims 1 to 11, the method according to any one of claims 12 to 20, the method according to any one of claims 21 to 28, or the method according to any one of claims 29 to 32.

FIG. 1A

NG-RAN

FIG. 1B

NG-RAN

FIG. 1C

NG-RAN

FIG. 1D

Terminal device

NTN
access network device

201: Send service information of a
satellite and coverage information of an
NTN cell of the satellite

202: Send first information

203: Send first indication information

204: When the terminal device determines,
based on the service information and the
coverage information, that the terminal
device is not within a coverage area of the
NTN cell or is at an edge of the coverage
area of the NTN cell, the terminal device
searches for a TN neighboring cell based
on the first information

FIG. 2

| Terminal device | | NTN<br>access network device |
|---|---|---|

301: Broadcast service information of a satellite and coverage information of an NTN cell of the satellite

302: Broadcast TN neighboring cell indication information

303: Broadcast search time indication information and/or a distance threshold

304: Broadcast first indication information

305: When the terminal device determines, based on the service information and the coverage information, that the terminal device is not within a coverage area of the NTN cell or is at an edge of the coverage area of the NTN cell, the terminal device searches for a TN neighboring cell within duration indicated by the search time indication information

306a: When the terminal device finds the TN neighboring cell within the duration indicated by the search time indication information, the terminal device camps on the found TN neighboring cell

306b: When the terminal device does not find the TN neighboring cell within the duration indicated by the search time indication information, the terminal device stops performing an idle mode task

307: When a distance between a current geographical location of the terminal device and a reference geographical location reaches the distance threshold, the terminal device performs the idle mode task

FIG. 3

FIG. 4

Terminal device

NTN
access network device

501: Broadcast service information of
a satellite and coverage information
of an NTN cell of the satellite

502: Broadcast geographical area information
corresponding to a TN neighboring cell

503: Broadcast TN neighboring cell
information

504: Broadcast first indication information

505: When the terminal device determines, based on the
service information and the coverage information, that the
terminal device is not within a coverage area of the NTN
cell or is at an edge of the coverage area of the NTN cell,
the terminal device searches for the TN neighboring cell
in a geographical area indicated by the geographical area
information corresponding to the TN neighboring cell

506a: When a current geographical
location of the terminal device belongs
to the geographical area indicated by
the geographical area information of
the TN neighboring cell, the terminal
device searches for at least one TN
neighboring cell indicated by the TN
neighboring cell information

506b: When a current geographical
location of the terminal device does not
belong to the geographical area
indicated by the geographical area
information of the TN neighboring cell,
the terminal device stops performing an
idle mode task

507: When the current geographical
location of the terminal device belongs
to the geographical area indicated by
the geographical area information of the
TN neighboring cell, the terminal
device is triggered to start to perform
the idle mode task

FIG. 5

EP 4 535 867 A1

Geographical area indicated by
geographical area information
corresponding to a TN neighboring cell

Coverage area of a TN
neighboring cell 1

1

((ϙ))

((ϙ))
2

((ϙ))
3

Coverage area of a TN
neighboring cell 3

Coverage area of a TN
neighboring cell 2

FIG. 6

Terminal device

TN
access network device

701: Obtain service information of a
satellite and coverage information of an
NTN cell of the satellite

702: Send first time information

703a: If the terminal device
determines, based on the service
information and the coverage
information, that the terminal device is
within a coverage area of the NTN
cell, the terminal device starts to
search for the NTN cell

703b: If the terminal device determines,
based on the service information and
the coverage information, that the
terminal device is not within a coverage
area of the NTN cell, the terminal
device does not start to search for the
NTN cell

FIG. 7

45

FIG. 8

FIG. 9

100

Communication apparatus

1001
Processing module

1002
Interface module

1003
Storage module

FIG. 10

## INTERNATIONAL SEARCH REPORT

| International application No. |
|---|
| **PCT/CN2023/101613** |

**A. CLASSIFICATION OF SUBJECT MATTER**

H04W36/00(2009.01)i

According to International Patent Classification (IPC) or to both national classification and IPC

**B. FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

3GPP, CNTXT, ENTXTC, VEN: 地面, 非地面网络, 非陆地, 覆盖, 陆地, 搜索, 卫星, 小区, 星历, 选择, 重选, cell, coverage, ephemeris, NTN, out, search, TN

**C. DOCUMENTS CONSIDERED TO BE RELEVANT**

| Category* | Citation of document, with indication, where appropriate, of the relevant passages | Relevant to claim No. |
|---|---|---|
| X | WO 2021180154 A1 (MEDIATEK SINGAPORE PTE. LTD. et al.) 16 September 2021 (2021-09-16)<br>description, paragraphs [0018]-[0036] | 1-20, 33-35 |
| X | CN 113395717 A (DATANG MOBILE COMMUNICATIONS EQUIPMENT CO., LTD.) 14 September 2021 (2021-09-14)<br>description, paragraphs [0029]-[0197] | 21-35 |
| X | MEDIATEK INC. "Idle mode mobility for NTN-TN scenarios"<br>*R2-2200621, 3GPP TSG-RAN WG2 Meeting #116-bis-e,* 25 January 2022 (2022-01-25), pp. 1-4 | 1-35 |
| A | CN 111866964 A (TELECOMMUNICATIONS TECHNOLOGY RESEARCH INSTITUTE CO., LTD.) 30 October 2020 (2020-10-30)<br>entire document | 1-35 |
| A | CN 113644950 A (HUAWEI TECHNOLOGIES CO., LTD.) 12 November 2021 (2021-11-12)<br>entire document | 1-35 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2023** | **21 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/101613** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022038573 A1 (TELEFONAKTIEBOLAGET LM ERICSSON (PUBL)) 24 February 2022 (2022-02-24)<br>    entire document | 1-35 |

Form PCT/ISA/210 (second sheet) (July 2022)

**INTERNATIONAL SEARCH REPORT**
Information on patent family members

International application No.

**PCT/CN2023/101613**

| Patent document cited in search report | | | Publication date (day/month/year) | Patent family member(s) | | | Publication date (day/month/year) |
|---|---|---|---|---|---|---|---|
| WO | 2021180154 | A1 | 16 September 2021 | CN | 115244987 | A | 25 October 2022 |
| | | | | US | 2023102334 | A1 | 30 March 2023 |
| CN | 113395717 | A | 14 September 2021 | | None | | |
| CN | 111866964 | A | 30 October 2020 | WO | 2020220940 | A1 | 05 November 2020 |
| | | | | TW | 202046771 | A | 16 December 2020 |
| | | | | EP | 3965471 | A1 | 09 March 2022 |
| | | | | US | 2022210711 | A1 | 30 June 2022 |
| CN | 113644950 | A | 12 November 2021 | WO | 2021228029 | A1 | 18 November 2021 |
| | | | | EP | 4142179 | A1 | 01 March 2023 |
| | | | | US | 2023096165 | A1 | 30 March 2023 |
| WO | 2022038573 | A1 | 24 February 2022 | EP | 4201107 | A1 | 28 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210860137